(19)

Europäisches
Patentamt
European
Patent Office
Office européen
des brevets

(11)  **EP 4 508 968 A1**

(12)  **EUROPEAN PATENT APPLICATION**
published in accordance with Art. 153(4) EPC

(43) Date of publication:
**19.02.2025  Bulletin 2025/08**

(21) Application number: **23787673.5**

(22) Date of filing: **11.04.2023**

(51) International Patent Classification (IPC):
**A01D 34/00** *(2006.01)*      **G06V 20/10** *(2022.01)*

(52) Cooperative Patent Classification (CPC):
**A01D 34/00; G06V 20/10**

(86) International application number:
**PCT/CN2023/087522**

(87) International publication number:
**WO 2023/198029 (19.10.2023 Gazette 2023/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.04.2022  CN 202210390617
14.04.2022  CN 202220882548 U**

(71) Applicant: **Positec Power Tools (Suzhou) Co., Ltd.
Suzhou, Jiangsu 215123 (CN)**

(72) Inventors:
• **ANDRIOLO, Paolo**
**Vicenza (VI) (IT)**
• **DALFRA, Davide**
**Vicenza (VI) (IT)**

• **TESTOLIN, Federico**
**Vicenza (VI) (IT)**
• **CONTI, Emanuel**
**Vicenza (VI) (IT)**
• **DU, Jiang**
**Suzhou, Jiangsu 215123 (CN)**
• **LI, Xinghong**
**Suzhou, Jiangsu 215123 (CN)**
• **WANG, Shuo**
**Suzhou, Jiangsu 215123 (CN)**
• **WANG, Kai**
**Suzhou, Jiangsu 215123 (CN)**

(74) Representative: **Kilburn & Strode LLP
Lacon London
84 Theobalds Road
Holborn
London WC1X 8NL (GB)**

(54)  **AUTOMATIC MOWER**

(57)    The present invention relates to an autonomous lawn mower. The autonomous lawn mower can autonomously move and perform mowing work in a preset working area, and includes: a body, having a front end; a movement module, driving the autonomous lawn mower to move; a mowing assembly, performing a mowing action on grass in the working area; and an image acquisition apparatus, disposed at a top of the body front end, and configured to obtain an image in a traveling direction of the body; an area covered by a projection of a field of view angle of the image acquisition apparatus onto a horizontal plane with a preset height is a field of view area of the image acquisition apparatus; the field of view area includes a first field of view boundary far away from the body front end and a second field of view boundary close to the body front end in the traveling direction of the body; the image acquisition apparatus is installed according to preset installation parameters, so that a distance between the first field of view boundary and the body front end is greater than or equal to a response distance of the autonomous lawn mower; the response distance is a distance required for the autonomous lawn mower to avoid a target object; the target object includes a boundary and an obstacle.

FIG. 1

EP 4 508 968 A1

## Description

### TECHNICAL FIELD

The present invention relates to a lawn mower, and in particular, to an autonomous lawn mower.

### BACKGROUND

An autonomous lawn mower can autonomously move and perform mowing work in a working area, can free a user from tedious mowing work and reduce human labor, and is therefore widely popular among consumers. To autonomously move and mow in the working area, the autonomous lawn mower needs to have a capability of recognizing the working area and also needs to have a capability of recognizing an obstacle. How to enable the autonomous lawn mower to recognize an obstacle accurately and enable the autonomous lawn mower to adopt appropriate obstacle avoidance measures after recognizing an obstacle is a technical problem that must be resolved to make the autonomous lawn mower more intelligent. To implement the control of the lawn mower in the working area, at present, for the autonomous lawn mower, a boundary wire that can transmit an electrical signal is mainly disposed at an edge zone of the corresponding working area to limit the movement of the autonomous lawn mower, and obstacle detection is implemented through a collision sensor. How to enable the autonomous lawn mower to autonomously move and recognize an obstacle in the working area and make a response without colliding with an obstacle is particularly conducive to the safety of a user, and therefore has attracted special attention of consumers.

### SUMMARY

To overcome deficiencies in existing technologies, a problem to be resolved by embodiments of the present disclosure is to provide an autonomous lawn mower with noncontact obstacle avoidance, to improve the safety and application range of the lawn mower.
An autonomous lawn mower is provided. The autonomous lawn mower can autonomously move and perform mowing work in a preset working area, and includes: a body, having a body front end and a body rear end that are opposite in a traveling direction of the autonomous lawn mower; a movement module, driving the autonomous lawn mower to move; a mowing assembly, cutting grass in the working area; and an image acquisition apparatus, disposed at a top of the body front end, and obtaining an image in the traveling direction of the body, where an area covered by a projection of a field of view angle of the image acquisition apparatus onto a horizontal plane with a preset height is a field of view area of the image acquisition apparatus, and the field of view area includes a first field of view boundary far away from the body front end and a second field of view boundary close to the body front end in the traveling direction of the autonomous lawn mower; the image acquisition apparatus is configured to be installed according to preset installation parameters, so that the first field of view boundary is at a first distance from the body front end, and the second field of view boundary is at a second distance from the body front end; the first distance is greater than or equal to a response distance of the autonomous lawn mower, the response distance is a distance required for the autonomous lawn mower to avoid a target object, and the target object includes a boundary and an obstacle; and the second distance is less than or equal to 500 mm.
Through the customized installation of the image acquisition apparatus, the first distance is greater than or equal to the response distance of the autonomous lawn mower, so that the autonomous lawn mower can complete obstacle avoidance and remain inside a boundary in the working area, thereby improving the safety of the autonomous lawn mower.
In one of the implementations, the response distance includes at least one of a braking distance and an image recognition distance, where the braking distance is a traveling distance of the autonomous lawn mower for avoiding the target object in a braking manner; and the image acquisition apparatus has an image recognition time, and the image recognition distance is a traveling distance of the autonomous lawn mower in the image recognition time.
In one of the implementations, the first distance is greater than or equal to a sum of the braking distance of the autonomous lawn mower and the image recognition distance, where the braking distance is at least related to one of the following movement parameters: a braking time and a traveling speed of the autonomous lawn mower; and the image recognition distance is related to the image recognition time of the image acquisition apparatus and the traveling speed of the autonomous lawn mower.
In one of the implementations, a value range of the traveling speed is 0.25 m/s to 0.5 m/s, a value range of the braking time is 50 ms to 2 s, and a value range of the braking distance is 12.5 mm to 1000 mm; and a value range of the image recognition time is 50 ms to 500 ms, and the image recognition distance ranges from 125 mm to 250 mm.
In one of the implementations, the image recognition time is less than or equal to 0.6 s.
In one of the implementations, the braking distance is 25 mm.
In one of the implementations, the image recognition distance is 300 mm.
In one of the implementations, the first distance and the second distance are separately determined based on the installation parameters of the image acquisition apparatus, internal parameters of the image acquisition apparatus, and the preset height h3, where the installation parameters at least include an installation height h1, an installation distance x0, and an installation angle, where the installation height h1 is a height of the image acquisition apparatus from a horizontal ground, the installation distance x0 is a horizontal distance of the image acquisition apparatus from the body front end, and the installation angle includes a lens rotation angle a3, and the lens rotation angle a3 is an included angle between a lens central axis of the image acquisition apparatus and a vertical direction; and the internal parameters of the image acquisition apparatus include a vertical field of view angle a2.

In one of the implementations, the second distance is less than or equal to a predetermined blind spot threshold.

In one of the implementations, a value range of the preset height h3 is $0\,mm \leq h3 \leq 150\,mm$, and a value range of the installation height h1 is $150\,mm \leq h1 \leq 500\,mm$.

In one of the implementations, a value range of the vertical field of view angle a2 of the image acquisition apparatus is $45° \leq a2 \leq 90°$.

In one of the implementations, a value range of the lens rotation angle a3 of the image acquisition apparatus is $0 \leq a3 \leq 75°$.

In one of the implementations, a value range of the installation distance x0 is $0 \leq x0 \leq 220\,mm$.

In one of the implementations, a value range of the horizontal installation angle a1 is $0° \leq a1 \leq 180°$.

In one of the implementations, a value range of the response distance is 135 mm to 1250 mm.

In one of the implementations, the installation angle further includes a horizontal installation angle a1, and the horizontal installation angle a1 is an included angle between a perpendicular of the lens central axis of the image acquisition apparatus and a horizontal line; a value range of the installation height h1 is $218\,mm \leq h1 \leq 434\,mm$; a value range of the installation distance x0 is $0 \leq x0 \leq 83\,mm$; a value range of the horizontal installation angle a1 is $0° \leq a1 \leq 86°$; a value range of the vertical field of view angle a2 is $45° \leq a2 \leq 90°$; and a value range of the lens rotation angle a3 is $52° \leq a3 \leq 68°$.

In one of the implementations, the installation height h1 is equal to 220 mm; the installation distance x0 is equal to 17 mm; the horizontal installation angle a1 is equal to 38°; the lens rotation angle a3 is equal to 53°; and the vertical field of view angle a2 is equal to 73°.

In one of the implementations, the first distance is greater than or equal to 800 mm.

In one of the implementations, a value range of the blind spot threshold is 50 mm to 500 mm.

In one of the implementations, the installation angle further includes a horizontal installation angle a1, and the horizontal installation angle a1 is an included angle between a perpendicular of the lens central axis of the image acquisition apparatus and a horizontal line; a value range of the installation height h1 is $200\,mm \leq h1 \leq 400\,mm$; a value range of the installation distance x0 is $0 \leq x0 \leq 40\,mm$; a value range of the horizontal installation angle a1 is $30° \leq a1 \leq 45°$; a value range of the vertical field of view angle a2 is $60° \leq a2 \leq 80°$; and a value range of the lens rotation angle a3 is $30° \leq a3 \leq 45°$.

In one of the implementations, the installation height h1 is equal to 220 mm; the installation distance x0 is equal to 17 mm; the horizontal installation angle a1 is equal to 38°; the lens rotation angle a3 is equal to 38°; and the vertical field of view angle a2 is equal to 73°.

In one of the implementations, the first distance is 805 mm.

In one of the implementations, the second distance is less than or equal to 0, the body has a projection onto the horizontal plane with the preset height, and the second distance being less than 0 includes the second field of view boundary being within a range of the projection.

In one of the implementations, the blind spot threshold is 150 mm.

In one of the implementations, the internal parameters of the image acquisition apparatus further include a horizontal field of view angle a4, and a value range of the horizontal field of view angle a4 of the image acquisition apparatus is $60° \leq a4 \leq 160°$.

In one of the implementations, a ratio of the horizontal field of view angle a4 to the vertical field of view angle a2 is 4:3 or 16:9.

In one of the implementations, the horizontal field of view angle a4 is equal to 130°, and the vertical field of view angle a2 is equal to 73°.

In one of the implementations, the field of view area includes a third field of view boundary located on a left side of the traveling direction and a fourth field of view boundary located on a right side of the traveling direction in a direction perpendicular to the traveling direction of the body, where a distance between the third field of view boundary and the fourth field of view boundary is 1.2 to 3 times a body width of the autonomous lawn mower.

In one of the implementations, a value range of the body width is 400 mm to 550 mm.

In one of the implementations, the distance between the third field of view boundary and the fourth field of view boundary is determined based on the installation parameters, internal parameters of the image acquisition apparatus, and the preset height h3; the installation parameters at least include an installation height h1; and the internal parameters of the image acquisition apparatus include a horizontal field of view angle a4, where the horizontal field of view angle a4 is configured for determining a detection distance of the image acquisition apparatus in a body width direction.

In one of the implementations, a value range of the installation height h1 is 150 mm ≤ h1 ≤ 500 mm, and a value range of the preset height h3 is 0 mm ≤ h3 ≤ 150 mm.

In one of the implementations, a value range of the horizontal field of view angle a4 of the image acquisition apparatus is 60° ≤ a4 ≤ 160°.

## BRIEF DESCRIPTION OF THE DRAWINGS

The foregoing objectives, technical solutions, and beneficial effects of the present invention can be clearly obtained with reference to the following detailed description that can be used to implement specific embodiments of the present invention in combination with the description of the accompanying drawings.

The same numerals and symbols in the accompanying drawings and description are configured for representing the same or equivalent elements.

FIG. 1 is a schematic structural diagram of an autonomous lawn mower according to the present invention;

FIG. 2 is a schematic diagram of a field of view of an image acquisition apparatus according to the present invention;

FIG. 3 is a schematic diagram of a field of view of an image acquisition apparatus used in an autonomous lawn mower according to the present invention, where a field of view boundary of the field of view close to a body front end is tangent to or at least partially overlaps the body front end;

FIG. 4 is a side view of an autonomous lawn mower with a field of view of the image acquisition apparatus in FIG. 2 according to the present invention;

FIG. 5 is a top view of an autonomous lawn mower with a field of view of the image acquisition apparatus in FIG. 2 according to the present invention;

FIG. 6 is a schematic diagram of a field of view of a projection of an image acquisition apparatus used in an autonomous lawn mower onto a plane with a grass height greater than 0 according to the present invention;

FIG. 7 is a schematic structural diagram of an image acquisition apparatus being installed on an autonomous lawn mower in a first installation manner;

FIG. 8 is a schematic structural diagram of an image acquisition apparatus being installed on an autonomous lawn mower in a second installation manner;

FIG. 9 is a schematic structural diagram of an image acquisition apparatus being installed on an autonomous lawn mower in a third installation manner;

FIG. 10 is a schematic structural diagram of an image acquisition apparatus being installed on an autonomous lawn mower in a fourth installation manner;

FIG. 11 is a schematic structural diagram of an image acquisition apparatus being installed on an autonomous lawn mower in a fifth installation manner;

FIG. 12 is a schematic structural diagram of an image acquisition apparatus being installed on an autonomous lawn mower in a manner of being not rotatable around an axis;

FIG. 13 is a schematic structural diagram of an image acquisition apparatus under a first limiting installation condition;

FIG. 14 is a schematic structural diagram of an image acquisition apparatus under a second limiting installation condition;

FIG. 15 is a schematic diagram of acquisition of an image acquisition apparatus considering a boundary constraint; and

FIG. 16 is a schematic diagram of a projection of a view-finding ray of the image acquisition apparatus shown in FIG. 15 onto a vertical plane.

## DETAILED DESCRIPTION

The following describes in detail preferred embodiments of the present invention with reference to the accompanying drawings, so that advantages and features of the present invention can be more easily understood by a person skilled in the art, to define the protection scope of the present invention more clearly and definitely. The following implementations may be appropriately combined with each other. The same numerals and symbols in the accompanying drawings and different embodiments in the description are configured for representing the same or equivalent elements.

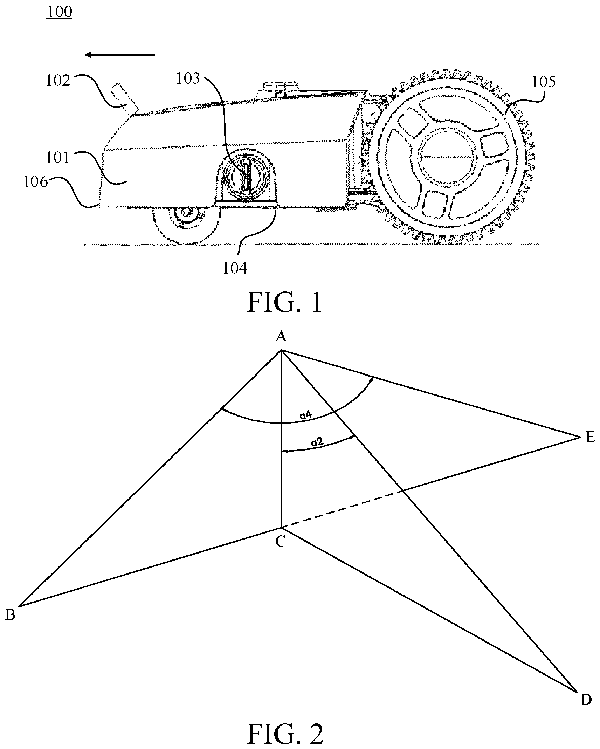

Referring to FIG. 1, in an embodiment of this application, an autonomous lawn mower 100 is provided. The autonomous lawn mower autonomously moves and autonomously performs mowing work in a preset working area. The autonomous lawn mower 100 includes a body 101, a movement module 105, a mowing assembly 104, and a control module 103. The movement module 105 and the mowing assembly 104 are electrically connected to the control module 103.

The body 101 has a front end 106.

The movement module 105 is installed on the body, and is configured to drive the autonomous lawn mower 100 to move, for example, drive the autonomous lawn mower to move in the preset working area.

Specifically, the movement module 105 includes a walking wheel and a drive motor for driving the walking wheel to walk, and an output end of the drive motor is connected to the walking wheel.

The mowing assembly 104 is installed on the body, and is configured to perform a preset mowing action, for example, in the working area, cut grass in the working area.

The control module 103 is installed on the body, and is configured to control the movement module 105 to drive the autonomous lawn mower 100 to move, and control the mowing assembly 104 to perform mowing work.

Specifically, the mowing assembly 104 includes a cutting deck and a cutting motor for driving the cutting deck to rotate. At least one blade is disposed on the cutting deck, and the cutting deck is driven by the cutting motor to rotate, to drive the blade thereon to cut grass.

Further, the autonomous lawn mower 100 may further include a protection mechanism (not shown in the figure), configured to protect the cutting deck. The protection mechanism may be, for example, a protection cover or a housing of the body 101.

Further, the autonomous lawn mower 100 may further include a height adjustment mechanism (not shown in the figure) for adjusting the height of the cutting deck, to adjust the cutting deck to different heights, thereby obtaining different grass heights.

Further, the autonomous lawn mower further includes an image acquisition apparatus 102. The image acquisition apparatus 102 is disposed at a top of a body front end, and is configured to acquire an image in a traveling direction (as shown by the arrow in FIG. 1) of the body 101.

An area covered by a projection of a field of view (which may also be referred to as a field of view angle) coverage area of the image acquisition apparatus 102 onto a horizontal plane with a preset height is a field of view area of the image acquisition apparatus, the field of view area includes a first field of view boundary far away from the body front end and a second field of view boundary close to the body front end in the traveling direction of the body. The preset height may be, for example, set according to the height of grass (referred to as the grass height) or the height of an obstacle.

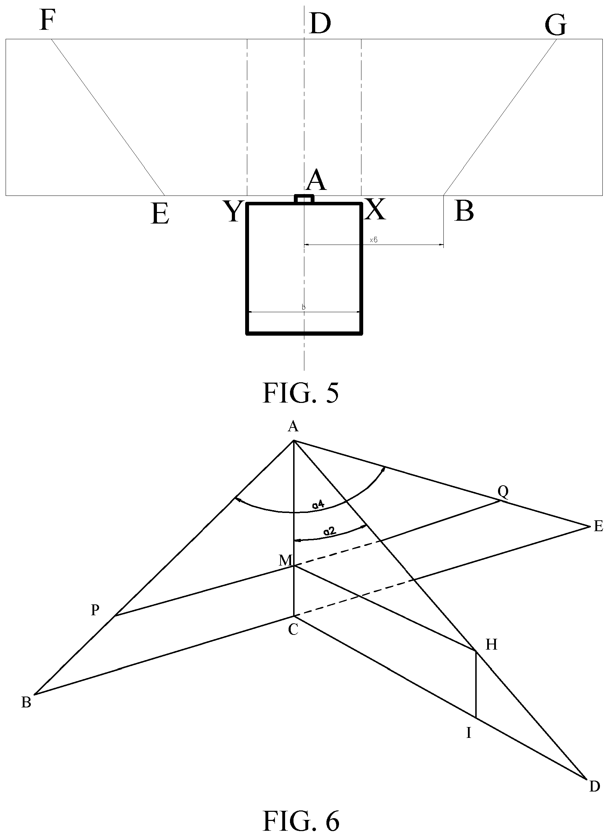

For ease of understanding, the first field of view boundary and the second field of view boundary are briefly described below by using an example in which the preset height is equal to 0, i.e., the field of view coverage area of the image acquisition apparatus may be directly projected onto a horizontal ground and with reference to FIG. 5.

Referring to FIG. 5, a field of view area of a projection of the field of view coverage area of the image acquisition apparatus onto the preset height, for example, onto the horizontal ground with a grass height or an obstacle height being 0, includes a first field of view boundary FG (or FDG) far away from the body front end and a second field of view boundary BE (or BCE) close to the body front end in the traveling direction of the body.

It may be understood that when the preset height (HI) is greater than 0, referring to FIG. 6, a field of view area of a projection of the field of view coverage area of the image acquisition apparatus onto a plane with the preset height greater than 0 a second field of view boundary PQ (or PMQ) close to the body front end in the traveling direction of the body. A first field of view boundary of a field of view area of a projection of the field of view coverage area of the image acquisition apparatus onto a horizontal plane with a grass height greater than 0 far away from the body front end in the traveling direction of the body passes through a point H, and is parallel to PQ and the first field of view boundary (FG shown in FIG. 5).

The image acquisition apparatus is installed according to preset installation parameters, so that the first field of view boundary is at a first distance from the body front end, and the second field of view boundary is at a second distance from the body front end. The first distance is greater than or equal to a response distance of the autonomous lawn mower, the response distance represents a distance required for the autonomous lawn mower to avoid a target object, and the target object includes a boundary and/or an obstacle; and the second distance is less than or equal to 500 mm.

The first distance is controlled to be greater than or equal to the response distance of the autonomous lawn mower, which is conducive to making the autonomous lawn mower discover a boundary and/or an obstacle in time, to provide the autonomous lawn mower with a sufficient time to complete an avoidance action. In addition, the second distance is controlled to be less than or equal to 500 mm, which is conducive to reducing a range of a detection blind spot of the image acquisition apparatus, to reduce the impact of the detection blind spot of the image acquisition apparatus on the safety of the autonomous lawn mower, and keep the autonomous lawn mower from colliding with a boundary and/or an obstacle around the body due to a failure to recognize the boundary and/or obstacle, thereby improving the safety of the autonomous lawn mower.

The response distance includes at least one of a braking distance and an image recognition distance, where the braking distance is a traveling distance of the autonomous lawn mower for avoiding the target object in a braking manner; and the image acquisition apparatus has an image recognition time, and the image recognition distance is a traveling distance of the autonomous lawn mower in the image recognition time.

For example, in a case that the image processing capability of the autonomous lawn mower is poor and as a result the weight of the image recognition distance is far greater than the impact of another factor (for example, a braking system performance factor), for example, the braking performance of the autonomous lawn mower is excellent and as a result the braking distance is far less than a threshold (for example, 10 mm), in this case, the response distance is approximately equal to the image recognition distance. In a case that the braking performance of the autonomous lawn mower is poor and as a result the weight of the braking distance is far greater than that of another impact factor (for example, an image processing performance factor), for example, the image acquisition apparatus of the autonomous lawn mower can recognize a target object instantaneously (for example, the image recognition time is within tens of milliseconds), in this case, the weight of the image recognition factor thereof is usually negligible. **In** this case, the response distance is approximately equal to the braking distance.

It can be seen that, the machine braking distance and the visual processing speed need to be considered for the installation parameters of the image acquisition apparatus. **In** other words, the machine braking distance and the visual processing speed affect the installation of the image acquisition apparatus.

In the present disclosure, when the autonomous lawn mower performs mowing work in the working area, because the working area is usually defined by a boundary line and a rock, a tree, a small animal, or another obstacle may be present in the working area, the autonomous lawn mower may recognize the boundary line and obstacle through a visual technology. In other words, the autonomous lawn mower encounters the boundary line or obstacle in the working area, and the autonomous lawn mower may detect the boundary line and obstacle through the image acquisition apparatus, and make a response according to requirements or program settings when detecting or recognizing a boundary line or an obstacle, where a response strategy of the machine mainly includes one of the following strategies:

strategy 1: adopting a braking manner;

strategy 2: adopting a steering manner, where for example, a curved steering manner may be adopted, or a reversing and steering manner may be adopted; and

strategy 3: adopting a "braking+steering" manner, where for example, a simultaneous braking and steering manner is adopted.

Therefore, the response distance is related to at least one of the braking distance or a steering distance of the autonomous lawn mower.

In an embodiment, when the autonomous lawn mower detects that a boundary line or an obstacle appears in front, for example, a boundary line or an obstacle appears at the first field of view boundary of the image acquisition apparatus, in a scenario in which the autonomous lawn mower avoids crossing a boundary or avoids colliding with an obstacle in a braking manner, in this case, the response distance is related to the braking distance of the autonomous lawn mower. The braking distance of the autonomous lawn mower is a distance by which the autonomous lawn mower moves in a braking process. For example, the braking distance may be a distance by which the machine travels from braking and complete stop in a traveling process.

In an embodiment, the image acquisition apparatus is installed according to preset installation parameters, so that a distance between the first field of view boundary and the body front end is greater than or equal to the braking distance of the autonomous lawn mower.

In an embodiment, the braking distance is related to a traveling speed of the autonomous lawn mower. The traveling speed may be detected by a speed sensor (for example, a Hall sensor) disposed on the movement module. In an embodiment, the autonomous lawn mower further includes an acceleration sensor, disposed on the body, and connected to the control module. The acceleration sensor is configured to detect acceleration information of the autonomous lawn mower. In this case, the braking distance may be determined based on the traveling speed and braking acceleration of the machine. For example, the acceleration sensor sends detected speed information, especially an acceleration during braking, to the control module. The control module calculates the braking distance according to the acceleration information detected by the autonomous lawn mower and the traveling speed of the autonomous lawn mower.

Alternatively, the autonomous lawn mower includes a speed sensor, disposed on the walking wheel of the body, and connected to the control module. The speed sensor is configured to detect speed information of the autonomous lawn mower and send same to the control module. The control module is further configured to calculate an acceleration according to the detected speed information of the autonomous lawn mower, and especially a traveling speed during braking; and calculate the braking distance according to the traveling speed and the acceleration.

In consideration of that the acceleration may constantly change in the braking process, in one aspect, the acceleration sensor needs to perform detection continuously. In this case, hardware requirements of the acceleration sensor are increased. In another aspect, the control module (for example, a processor) needs to perform calculation according to a real-time acceleration detected by the acceleration sensor. This raises higher requirements on the hardware and the calculation capability of the control module. In an embodiment, to reduce costs, for example, in the autonomous lawn mower, the acceleration sensor may be omitted, and/or a control module with low processor performance may be used. The braking distance may be determined based on the traveling speed and a braking time of the autonomous lawn mower. The braking time is related to the braking capability of the braking system of the machine. When the braking capability of the machine is better, the braking time is shorter. The braking time may be usually obtained according to experimental tests.

In an embodiment, a range of the traveling speed is 0.25 m/s to 0.5 m/s.

In an embodiment, a value range of the braking time is 50 ms to 2 s.

A value range of the braking distance determined based on the traveling speed and the braking time of the autonomous lawn mower is approximately 12.5 mm to 1000 mm.

For example, the value range of the traveling speed is 0.25 m/s to 0.5 m/s. When the braking time is 50 ms, the braking distance is within the range of 12.5 mm to 25 mm. When the braking time is 2 s, the range of the braking distance is 0.5 m to 1 m.

When the autonomous lawn mower acquires that a boundary line or an obstacle appears in front, for example, a boundary line or an obstacle appears at the first field of view boundary of the image acquisition apparatus, where the boundary line may be configured for defining the working area of the autonomous lawn mower, in a scenario in which the autonomous lawn mower avoids crossing a boundary or avoids an obstacle in a steering manner or needs to walk along an edge, in this case, the response distance is related to the steering distance of the autonomous lawn mower. The steering distance of the autonomous lawn mower is a distance by which the autonomous lawn mower moves in a steering process. For example, during curved steering, the steering distance may be a projection distance of a distance by which the autonomous lawn mower moves from starting steering to completing steering in a body width direction or a steering radius corresponding to a curve along which the autonomous lawn mower walks from starting steering to completing steering.

In an embodiment, the image acquisition apparatus is installed according to preset installation parameters, so that a distance between the first field of view boundary and the body front end is greater than or equal to the steering distance of the autonomous lawn mower.

In an embodiment, the steering distance is related to a traveling speed and a steering angle before or when the machine steers.

It needs to be noted that, the boundary line may be a physical boundary, for example, a cable or a fence, or may be a virtual boundary, for example, a boundary of the working area marked on a map in advance when the autonomous lawn mower establishes the map. This is not limited in the present disclosure.

Certainly, if the autonomous lawn mower acquires that a boundary line or an obstacle appears in front, for example, a boundary line or an obstacle appears at the first field of view boundary of the image acquisition apparatus, where the boundary line may be configured for defining the working area of the autonomous lawn mower, in a scenario in which the autonomous lawn mower avoids crossing a boundary or avoids an obstacle in a "braking+steering" manner or needs to walk along an edge, in this case, the response distance is related to the braking distance and the steering distance of the autonomous lawn mower.

In an embodiment, the image acquisition apparatus is installed according to preset installation parameters, so that a distance between the first field of view boundary and the body front end is greater than or equal to a sum of the braking distance and the steering distance of the autonomous lawn mower.

In addition, it needs to be noted that, in the scenario of avoiding crossing a boundary or avoiding an obstacle, whether the autonomous lawn mower uses the steering manner or uses the braking manner or uses the "braking+steering" manner is determined by an internal program of the autonomous lawn mower. This is not limited in this application.

It should be understood that, to avoid collision and damage, during the determining of the distance between the first field of view boundary and the body front end, especially when the body front end has a curved contour, an edge point of an end portion of the body front end in the traveling direction is used as a measurement endpoint to determine the distance from the first field of view boundary.

It needs to be noted that, during actual working of the autonomous lawn mower, the mowing assembly of the autonomous lawn mower is disposed at a central position of a bottom end of the body or at a position deviated from the central position by a specific distance. In consideration of this, when the autonomous lawn mower performs mowing work, the body may go beyond the boundary line by a set distance.

Therefore, in an embodiment, when a boundary line appears in front of the autonomous lawn mower, in the scenario in which the autonomous lawn mower avoids crossing a boundary in the braking manner, in this case, the response distance is further related to the set distance of the autonomous lawn mower.

In an embodiment, the image acquisition apparatus is installed according to the preset installation parameters, so that the distance between the first field of view boundary and the body front end is greater than or equal to a difference between the braking distance of the autonomous lawn mower and the set distance or the distance between the first field of view boundary and the body front end is greater than or equal to an absolute value of the difference between the braking distance of the autonomous lawn mower and the set distance.

Similarly, in an embodiment, when a boundary line appears in front of the autonomous lawn mower, in the scenario in which the autonomous lawn mower avoids crossing a boundary in the steering manner or steers to walk along an edge, in this case, the response distance is further related to the set distance of the autonomous lawn mower.

In an embodiment, the image acquisition apparatus is installed according to the preset installation parameters, so that the distance between the first field of view boundary and the body front end is greater than or equal to a difference between the steering distance of the autonomous lawn mower and the set distance or the distance between the first field of view boundary and the body front end is greater than or equal to an absolute value of the difference between the steering distance of the autonomous lawn mower and the set distance.

In an embodiment, the set distance may be, for example, selected from a range of 0.1 m to 1 m according to a machine model and an arrangement position of a mowing apparatus.

The image acquisition apparatus has an image processing time (or an image recognition time), and the autonomous lawn mower shoots an image in the traveling direction thereof through the image acquisition apparatus. In consideration of this, when an object, for example, a boundary line or an obstacle, appears in the image and the object is being recognized, because the autonomous lawn mower is still moving, in this case, an image recognition distance appears. The image recognition distance is a distance by which the autonomous lawn mower walks within the image recognition time of the image acquisition apparatus. It is easily understood that the image recognition distance is related to the image processing time (or the image recognition time) and the traveling speed of the autonomous lawn mower.

The image processing time may be represented by a frame rate of the image acquisition apparatus. For example, the frame rate is 3 fps, indicating shooting three times per second, i.e., approximately 0.3 s/frame. In this case, it is considered that the image processing time is 0.3 s. If the frame rate is 4 fps, indicating shooting four times per second, i.e., approximately 0.25 s/frame, in this case, the image processing time is 0.25 s. An image recognition time is defined, representing a time for the image acquisition apparatus to recognize a target object from an image. Because image recognition is usually implemented through comparison of a plurality of images, the image recognition time is an integer (and greater than or equal to 2) multiple longer than the image processing time. In an embodiment, the image recognition time is a time of implementing image recognition based on the comparison of two images. In other words, the image recognition time is twice longer than the image processing time. Therefore, for the frame rate of 3 fps, the image processing time is 0.3 s, and the image recognition time is 0.6 s. For the frame rate of 4 fps, the image recognition time is 0.5 s.

To avoid a potential safety risk in a process in which the autonomous lawn mower recognizes an object in the working area and ensure the safe running of the machine, in an embodiment, the response distance is related to the image recognition distance.

In an embodiment, the image acquisition apparatus is installed according to the preset installation parameters, so that the first distance is greater than or equal to the image recognition distance of the autonomous lawn mower.

It may be understood that the image processing time is related to the processing capability of the image acquisition apparatus. Usually, when the processing capability of the image acquisition apparatus is stronger, the image processing time is shorter, and the image recognition distance is smaller.

In an embodiment, a value range of the image processing time is 0.2 s to 0.5 s. A value range of the image recognition time is 0.4 s to 1 s. Further, the image processing time is less than or equal to 0.3 s, and the image recognition time is less than or equal to 0.6 s.

In an embodiment, the image recognition distance is approximately equal to a product of multiplying the image recognition time by the traveling speed of the autonomous lawn mower.

In an embodiment, when the value range of the image processing time is 0.2 s to 0.5 s and a value range of the traveling speed of the autonomous lawn mower is 0.25 m/s to 0.5 m/s, it may be obtained that a value range of the image recognition distance is 100 mm to 500 mm.

In an embodiment, the frame rate is 15 fps, indicating shooting 15 times per second, i.e., 67 ms/frame. In this case, the image processing time is 67 ms. The image recognition time is a time of implementing image recognition based on one image. In other words, the image recognition time is one time than the image processing time. Therefore, the image recognition time is 134 ms. In the present disclosure, when the value range of the image processing time is 50 ms to 500 ms and the value range of the traveling speed of the autonomous lawn mower is 0.25 m/s to 0.5 m/s, it may be obtained that a value range of the image recognition distance is 125 mm to 250 mm.

Similarly, it needs to be noted that, during actual working of the autonomous lawn mower and in the scenario in which it is acquired that a boundary line appears in front, the mowing assembly of the autonomous lawn mower is disposed at a central position of a bottom end of the body or at a position deviated from the central position by a specific distance or has a preserved distance from the body front section. In consideration of this, when the autonomous lawn mower performs mowing work, the body may go beyond the boundary line by a specific distance, and the body may usually go beyond the boundary line by a set distance.

Therefore, in an embodiment, when a boundary line appears in front of the autonomous lawn mower, in the scenario in which the autonomous lawn mower avoids crossing a boundary in the braking manner, in this case, the response distance may be further related to the set distance of the autonomous lawn mower.

In this case, the image acquisition apparatus is installed according to the preset installation parameters, so that the first distance is greater than or equal to a difference of subtracting the set distance from a sum of the braking distance of the autonomous lawn mower and the image recognition distance of the image acquisition apparatus; or the distance between the first field of view boundary and the body front end is greater than or equal to an absolute value of the difference of subtracting the set distance from the sum of the braking distance of the autonomous lawn mower and the image recognition distance of the image acquisition apparatus.

Similarly, in an embodiment, when a boundary line appears in front of the autonomous lawn mower, in the scenario in which the autonomous lawn mower avoids crossing a boundary in the steering manner or steers to walk along an edge, in this case, the response distance is further related to the set distance of the autonomous lawn mower.

In this case, the image acquisition apparatus is installed according to the preset installation parameters, so that the first distance is greater than or equal to a difference of subtracting the set distance from a sum of the steering distance of the autonomous lawn mower and the image recognition distance of the image acquisition apparatus; or the distance between the first field of view boundary and the body front end is greater than or equal to an absolute value of the difference of subtracting the set distance from the sum of the steering distance of the autonomous lawn mower and the image recognition distance of the image acquisition apparatus.

In consideration of ensuring moving efficiency, in the present disclosure, the autonomous lawn mower makes a high-speed movement. For the high-speed movement, a value of the traveling speed ranges from 0.45 m/s to 0.5 m/s, the speed is reduced in a reducer gearbox braking manner, and the braking time is approximately 50 ms.

For example, the value of the traveling speed is 0.5 m/s, a value of the braking time is 50 ms, and a value of the braking distance is approximately 25 mm. If a value of the image processing time is 0.3 s, the image recognition time is 0.6 s, the value of the traveling speed is 0.5 m/s, and a value of the image recognition distance is approximately 300 mm.

It can be seen that, because the image recognition time is greater than the braking time, and the image recognition distance is greater than the braking distance, i.e., the image recognition distance is usually not negligible.

Therefore, when a boundary line or an obstacle appears in front of the autonomous lawn mower, in a scenario in which the autonomous lawn mower avoids crossing a boundary or avoids colliding with an obstacle in the braking manner, the first distance is greater than or equal to the sum of the braking distance of the autonomous lawn mower and the image recognition distance of the image acquisition apparatus. It may be understood that the braking distance is at least related to one of the following movement parameters: a braking time and a traveling speed of the autonomous lawn mower; and the image recognition distance is related to the image recognition time or the image processing time of the image acquisition apparatus and the traveling speed of the autonomous lawn mower.

In consideration of that an image acquisition apparatus used in the industry of autonomous lawn mowers has different processing capabilities and braking capabilities, to improve the effectiveness and accuracy of image recognition and the safety of the machine, in an embodiment, a response distance for approximately 2 s of the autonomous lawn mower running at a routine speed (3 m/s) is reserved between the body front end and the farthest end of the field of view in the traveling direction. For example, the reserved response distance is approximately 600 mm.

In an embodiment, the first distance is 805 mm.

Certainly, when a boundary line or an obstacle appears in front of the autonomous lawn mower, in a scenario in which the autonomous lawn mower avoids crossing a boundary or avoids an obstacle in the steering manner or needs to walk along an edge, the first distance is greater than or equal to the sum of the steering distance of the autonomous lawn mower and the image recognition distance of the image acquisition apparatus.

In the present disclosure, the first distance and the second distance are related to the installation parameters of the image acquisition apparatus, the internal parameters of the image acquisition apparatus, and the preset height h3.

The installation parameters include an installation orientation and an installation angle. The installation orientation includes, for example, an installation height h1 and an installation distance x0. The installation height h1 is a height of the image acquisition apparatus from a horizontal ground. For example, when the image acquisition apparatus is a camera, the installation height h1 is a height of the camera from the horizontal ground. The height may be a distance between a central point of a lens of the camera and the horizontal ground. The installation distance x0 is a horizontal distance of the image acquisition apparatus from the body front end. For example, when the image acquisition apparatus is a camera, the installation distance is a distance between a central point of a lens of the camera and the body front end. It needs to be noted that, when the body of the autonomous lawn mower has an irregular shape, the front end may be, for example, an edge position of the body front end.

The installation angle includes a lens rotation angle a3, and the lens rotation angle a3 is an included angle between a lens central axis of the image acquisition apparatus and a vertical direction.

In an embodiment, the installation angle may further include a horizontal installation angle a1, and the horizontal installation angle a1 is an included angle between a perpendicular of the lens central axis of the image acquisition apparatus and a horizontal line. In other words, the horizontal installation angle a1 is an included angle formed between the horizontal line and a connecting line between a central point of the image acquisition apparatus and an installation point thereof on the body.

It may be understood that the installation distance x0 is related to the horizontal installation angle a1. In other words, the installation distance x0 may be determined based on the horizontal installation angle a1.

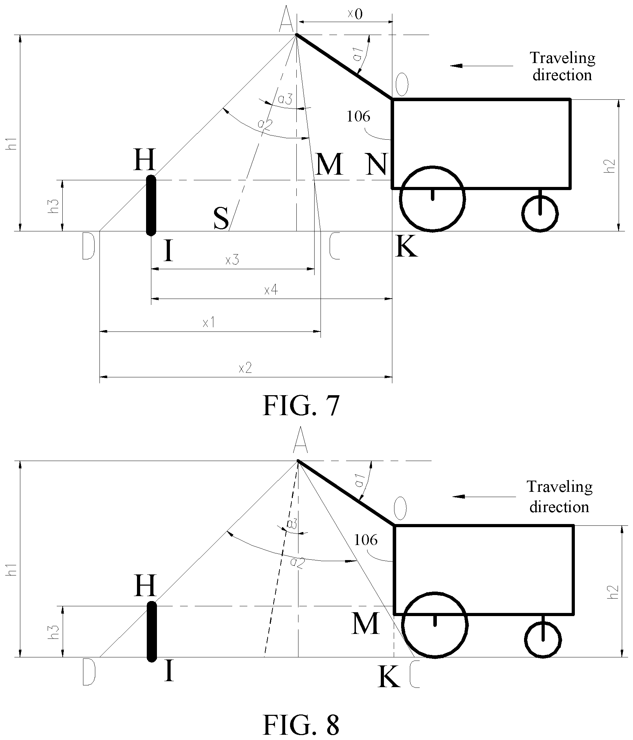

Referring to FIG. 7, it can be learned that the installation distance x0 may be determined according to a trigonometric relationship between a cantilever length L (OA) and the horizontal installation angle a1 or determined through a trigonometric relationship among the installation height h1, a body height h2, and the horizontal installation angle a1. Certainly, a1 may be determined when x0 and L or x0, h1, and h2 are determined.

The internal parameters include a vertical field of view angle a2. The vertical field of view angle a2 is configured for determining a maximum detection distance of the image acquisition apparatus in the traveling direction of the body.

In other words, the first distance is determined based on the installation parameters of the image acquisition apparatus, the internal parameters of the image acquisition apparatus, and the preset height h3. The preset height may be determined based on a grass height or an obstacle height in the working area.

In the present disclosure, a value range of the preset height h3 is $0\,mm \leq h3 \leq 150\,mm$.

In the present disclosure, in consideration of that an installation position of the image acquisition apparatus cannot be excessively high, to avoid shaking, and the installation position cannot be excessively low, to keep wastewater, dirt, dust, or the like from contaminating the image acquisition apparatus, in an embodiment, a value range of the installation height h1 of the image acquisition apparatus is $150\,mm \leq h1 \leq 500\,mm$.

Further, in consideration of that if the field of view angle of the image acquisition apparatus is excessively large, an optical distortion of an image increases, in an embodiment, a value range of the vertical field of view angle a2 of the image acquisition apparatus is $45° \leq a2 \leq 90°$.

Further, in consideration of that the autonomous lawn mower works outdoors and needs to adapt to outdoor strong wind, rain, snow or other severe weather, to keep the lens from being getting wet and avoid affecting recognition, a range of a rotation angle a3 of the image acquisition apparatus is $0 \leq a3 \leq 75°$.

Further, in consideration of that an installation distance of the image acquisition apparatus cannot be excessively small, or otherwise an excessive part of the body may be shot to affect recognition, the working risk of the autonomous lawn mower may be increased, and the safety thereof may be reduced, and the installation distance cannot be excessively large, or otherwise the passability may be affected, to keep the detection blind spot from becoming excessively large, in an embodiment, a value range of the installation distance X0 of the image acquisition apparatus is $0 \leq x0 \leq 220\,mm$.

Further, in consideration of that if an installation angle of the image acquisition apparatus is excessively large, there is interference of intense light, in an embodiment, a value range of the installation angle a1 is $0 \leq a1 \leq 90°$.

In an embodiment, when the reserved response distance is 600 mm, in this case, to make the first distance greater than the response distance, in the present disclosure, a lower limit value of the value range of the installation height h1 is 160 mm. A lower limit value of the value range of the installation distance X0 is -190 mm (negative), indicating that the camera can be installed at a position 190 mm behind the body front end; a value range of the horizontal installation angle a1 is $33° \leq a1$; a value range of the vertical field of view angle a2 is $62° \leq a2$; and the value range of the lens rotation angle a3 is $33° \leq a3$.

When the braking distance is 25 mm, the image recognition distance is 300 mm. In this case, the response distance is 325 mm. In this case, to make the first distance greater than the response distance, in this embodiment, the lower limit value of the value range of the installation height h1 needs to meet $85\,mm \leq h1$; the lower limit value of the value range of the installation distance X0 needs to meet $-465\,mm \leq x0$; a lower limit value of the value range of the horizontal installation angle a1 needs to meet $18° \leq a1$; a lower limit value of the value range of the vertical field of view angle a2 needs to meet $34° \leq a2$; and the value range of the lens rotation angle a3 needs to meet $18° \leq a3$.

It needs to be noted that, as the technology progresses, the braking distance or the image recognition distance keeps decreasing. In this case, the response distance can keep decreasing. Therefore, the allowable ranges of the four parameters become increasing wider.

In an embodiment of the present disclosure, the value range of the installation height h1 is $218\,mm \leq h1 \leq 434\,mm$; the value range of the installation distance x0 is $0 \leq x0 \leq 83\,mm$; the value range of the horizontal installation angle a1 is $0° \leq$

a1 ≤ 86°; the value range of the vertical field of view angle a2 is 45° ≤ a2 ≤ 90°; and the value range of the lens rotation angle a3 is 52° ≤ a3 ≤ 68°. Optionally, the installation height h1 is equal to 220 mm; the installation distance x0 is equal to 17 mm; the horizontal installation angle a1 is equal to 38°; the lens rotation angle a3 is equal to 53°; and the vertical field of view angle a2 is equal to 73°.

The ranges of the parameters are further limited, so that the impact of tall grass on the image acquisition apparatus in the traveling process of the autonomous lawn mower can be reduced, to enable the image acquisition apparatus to acquire a boundary image in time in the traveling process, thereby avoiding the case that the autonomous lawn mower is blocked by tall grass, fails to recognize a boundary in time, and collides with a physical boundary or rushes out of the working area. In other words, the image acquisition apparatus is appropriately set based on the ranges of the parameters, to ensure that the autonomous lawn mower can effectively acquire surrounding images during traveling, thereby ensuring the safety of the autonomous lawn mower during traveling.

In an embodiment of the present disclosure, the value range of the installation height h1 is 200 mm ≤ h1 ≤ 400 mm; the value range of the installation distance x0 is 0 ≤ x0 ≤ 40 mm; the value range of the horizontal installation angle a1 is 30° ≤ a1 ≤ 45°; the value range of the vertical field of view angle a2 is 60° ≤ a2 ≤ 80°; and the value range of the lens rotation angle a3 is 30° ≤ a3 ≤ 45°. Optionally, the value range of the installation height h1 is 220 mm ≤ h1 ≤ 400 mm; the value range of the installation distance x0 is 17 mm ≤ x0 ≤ 40 mm; the value range of the horizontal installation angle a1 is 38° ≤ a1 ≤ 45°; the value range of the vertical field of view angle a2 is 73° ≤ a2 ≤ 80°; and the value range of the lens rotation angle a3 is 30° ≤ a3 ≤ 45°. Optionally, the installation height h1 is equal to 220 mm; the installation distance x0 is equal to 17 mm; the horizontal installation angle a1 is equal to 38°; the lens rotation angle a3 is equal to 53°; and the vertical field of view angle a2 is equal to 73°.

The ranges of the parameters are further limited, so that the parameters fluctuate within the corresponding ranges, and it can be met that the first distance is greater than the response distance (for example, 325 mm). In addition, the second distance can be minimized, so that the impact of a blind spot on the image acquisition of the autonomous lawn mower is reduced, thereby improving the safety of the autonomous lawn mower during traveling.

Further, the first distance is greater than or equal to 800 mm. Optionally, the first distance may be 1000 mmm, 1250 mm, 1500 mm, 1600 mm, 1750 mm, 2000 mm, or 2250 mm. When the first distance is larger, the detection of the environment in front by the autonomous lawn mower is better facilitated, and a response action is made in time. However, when the first distance is larger, the range of a blind spot tends to increase, and as a result the recognition of a near-distance environment by the machine is affected. Therefore, the first distance is appropriately set, so that a balance can be reached between the range of a blind spot and the timely detection of the environment in front, thereby better ensuring the safety of the autonomous lawn mower during traveling.

Further, a value range of the response distance is 135 mm to 1600 mm, and may be, for example, 135 mm, 325 mm, 500 mm, 750 mm, 1250 mm, or 1600 mm. It can be learned based on the foregoing factors affecting the response distance that as the technology progresses, the response distance may keep decreasing.

In an embodiment, the internal parameters further include a horizontal field of view angle a4, where the horizontal field of view angle a4 is configured for determining the maximum detection distance of the image acquisition apparatus in the body width direction.

In an embodiment, the value range of the horizontal field of view angle a4 of the image acquisition apparatus is 60° to 160°.

To reduce the costs of the image acquisition apparatus and also take the performance and technical maturity of the image acquisition apparatus into consideration, in an embodiment, a ratio of the horizontal field of view angle a4 to the vertical field of view angle a2 of the image acquisition apparatus is 4:3 or 16:9. In other words, a camera with a lens aspect ratio of 4:3 or 16:9 may be chosen for the image acquisition apparatus.

In the present disclosure, the horizontal field of view angle a4 is equal to 130°, and the vertical field of view angle a2 is equal to 73°.

In consideration of that the impact of the detection blind spot of the image acquisition apparatus on the safety of the machine is not negligible, therefore, to avoid a blind spot in the traveling direction of the image acquisition apparatus and avoid problems such as that the machine cannot make a response in time in a scenario of encountering a boundary line, an obstacle, or the like and as a result the machine crosses a boundary or collides with an obstacle, in an embodiment, a blind spot threshold may be used to represent an upper limit value of the range of the detection blind spot of the image acquisition apparatus, so that the second distance (configured for representing the size of the detection blind spot) is greater than or equal to a predetermined blind spot threshold.

In an embodiment, a distance between the second field of view boundary and the body front end is less than or equal to 0, the body has a projection onto the horizontal plane with the preset height, and the distance between the second field of view boundary and the body front end being less than 0 includes the second field of view boundary being within a range of the projection. In other words, the distance between the second field of view boundary and the body front end being less than 0 includes that the second field of view boundary falls within the range of the body onto the plane with the preset height.

In an embodiment, the field of view angle includes a first side and a second side defining an angle range in the traveling direction of the body thereof. The first side is far away from the body front end, and the second side is close to the body front end. The second side is parallel to a tangent of the body front end.

In an embodiment, the field of view angle includes a first side and a second side defining an angle range in the traveling direction of the body thereof. The first side is far away from the body front end, and the second side is close to the body front end. The second side partially overlaps a tangent of the body front end.

For ease of understanding, referring to FIG. 6 and FIG. 8, for example, when the preset height, for example, the grass height, is h3 = 0, and the image acquisition apparatus makes a projection onto the horizontal ground. In this case, the second field of view boundary BE (or BCE) falls within a range of projection of the body onto the horizontal ground. In other words, a distance between the second field of view boundary BE (or BCE) and the body front end being less than 0 may be that the second field of view boundary BE (or BCE) is located in rear of a projection point K of the body front end 106 onto the horizontal ground (the traveling direction is used as a reference for the rear).

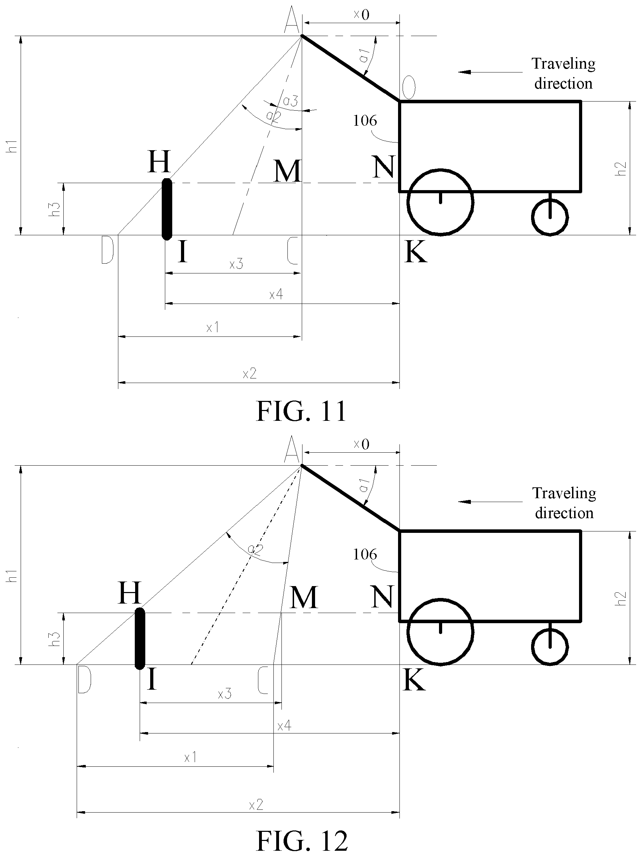

Referring to FIG. 11, the distance between the second field of view boundary BE (or BCE) and the body front end is a constant value greater than 0. The field of view angle (field of view area) has a first side AD far away from the body front end and a second side AC close to the body front end that are projected onto the horizontal ground in the traveling direction of the body. The second side AC is parallel to a tangent (a straight line passing through OK) of the body front end 106.

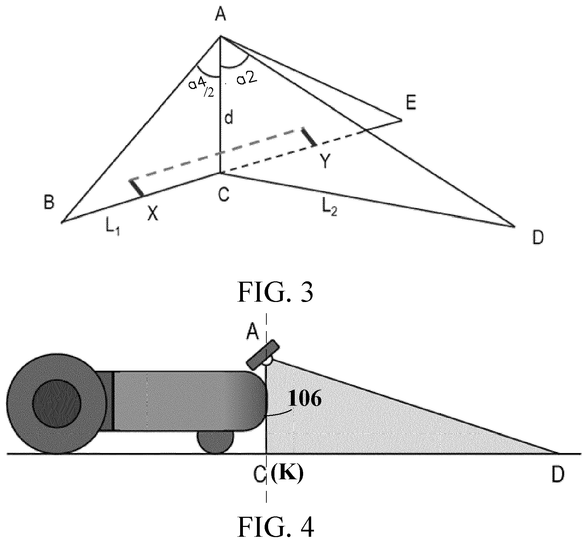

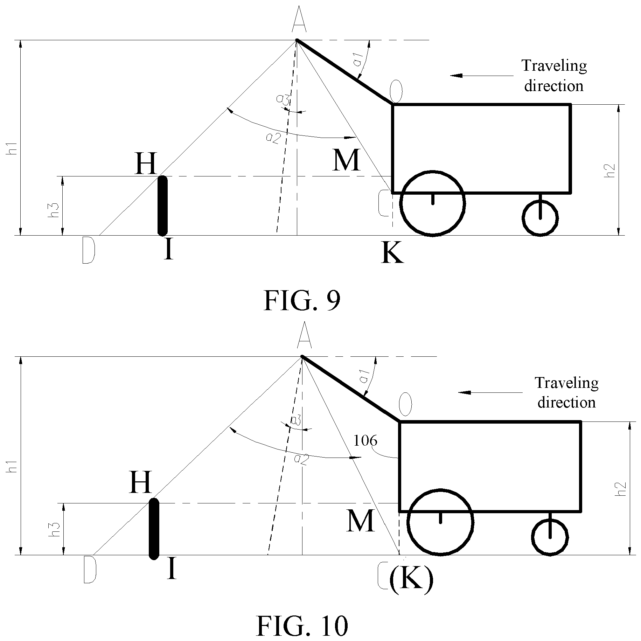

It may be understood that if the point C and the point K overlap, for example, as shown in FIG. 4 and FIG. 10, the distance between the second field of view boundary BE (or BCE) and the body front end is equal to 0. In an embodiment, referring to FIG. 4, the field of view area has a first side AD far away from the body front end and a second side AC close to the body front end that are projected onto grass in the traveling direction of the body. The second side AC partially overlaps a tangent (as shown by the dash line in FIG. 4 or a straight line passing through OK in FIG. 10) of the body front end 106.

In the present disclosure, referring to FIG. 2 to FIG. 10, the image acquisition apparatus has internal parameters. The internal parameters include a vertical field of view angle. A field of view area of a projection of the field of view coverage area of the image acquisition apparatus onto a plane with the preset height has a first side AD far away from the body front end and a second side AC close to the body front end that are projected onto grass in the traveling direction of the body. The first side AD and the second side AC form the vertical field of view angle a2 (or 4CAD). As shown in FIG. 3 and FIG. 4, the second side AC partially overlaps the tangent of the body front end.

In other words, after the image acquisition apparatus is installed, the second side on a side of the field of view close to the body in the traveling direction of the body is completely perpendicular to or flush with the front end of the machine, or a perpendicular from the central point of the image acquisition apparatus to the second field of view boundary is tangent to the body front end or at least partially overlaps the body front end, to eliminate blind spots of the image acquisition apparatus in both the traveling direction and a height direction perpendicular to the working area.

To avoid an excessively large blind spot, in an embodiment, the preset blind spot threshold is 150 mm.

Similarly, the distance between the second field of view boundary and the body front end is related to the installation parameters of the image acquisition apparatus, the internal parameters of the image acquisition apparatus, and the preset height.

In other words, the distance between the second field of view boundary and the body front end is determined based on the installation parameters of the image acquisition apparatus, the internal parameters of the image acquisition apparatus, and the preset height h3.

The installation parameters at least include an installation height h1, an installation distance x0, and an installation angle, where the installation height h1 is a height of the image acquisition apparatus from a horizontal ground, and the installation distance x0 is a horizontal distance of the image acquisition apparatus from the body front end.

The installation angle includes a lens rotation angle a3, and the lens rotation angle a3 is an included angle between a lens central axis of the image acquisition apparatus and a vertical direction.

Further, the installation angle may further include a horizontal installation angle a1, and the horizontal installation angle a1 is an included angle between a perpendicular of the lens central axis of the image acquisition apparatus and a horizontal line.

It may be understood that the installation distance x0 can be adjusted by adjusting the horizontal installation angle a1.

The internal parameters include a vertical field of view angle a2. The vertical field of view angle a2 is configured for determining a maximum detection distance of the image acquisition apparatus in the traveling direction of the body.

The preset height may be determined based on a grass height or an obstacle height in the working area. In an embodiment of the present disclosure, the value range of the preset height h3 is $0 \text{ mm} \leq h3 \leq 150 \text{ mm}$.

In the present disclosure, to avoid shaking of the image acquisition apparatus and contamination to the lens of the image acquisition apparatus by water splashing or the like, in an embodiment, the value range of the installation height h1 is $150 \text{ mm} \leq h1 \leq 500 \text{ mm}$.

Further, to avoid an excessively large optical distortion of an image acquired by the image acquisition apparatus, in an embodiment, a value range of the vertical field of view angle a2 of the image acquisition apparatus is $45° \leq a2 \leq 90°$.

Further, in consideration of that the autonomous lawn mower works outdoors, to enable the image acquisition apparatus to adapt to rain and snow and avoid problems of affected recognition and degraded safety when the lens gets wet, in an embodiment, the range of the lens rotation angle a3 is $0 \leq a3 \leq 75°$.

Further, to improve the passability of the image acquisition apparatus and reduce the damage of a blind spot, in an embodiment, the value range of the installation distance X0 of the image acquisition apparatus is $0 \leq x0 \leq 220$ mm.

Further, to keep the image acquisition apparatus from interference by intense light, in an embodiment, a value range of the installation angle a1 is $0 \leq a1 \leq 90°$.

In an embodiment of the present disclosure, the value range of the installation height h1 is $200$ mm $\leq h1 \leq 434$ mm; the value range of the installation distance x0 is $0 \leq x0 \leq 83$ mm; the value range of the horizontal installation angle a1 is $0° \leq a1 \leq 107°$; the value range of the vertical field of view angle a2 is $50° \leq a2 \leq 90°$; and the value range of the lens rotation angle a3 is $30° \leq a3 \leq 68°$.

The parameters are limited within corresponding small ranges, so that regardless of how to select the parameters within the corresponding small ranges, it is met that the first field of view boundary is greater than the braking distance and the image recognition distance (i.e., the first distance can adapt to any scenario in which the response distance is within 325 mm), and it can also be met that the detection blind spot is not excessively large (the blind spot is controlled from exceeding 150 mm), thereby greatly improving the safety and passability of the autonomous lawn mower, and reducing trouble for users.

In an embodiment, the internal parameters further include a horizontal field of view angle a4, where the horizontal field of view angle a4 is configured for determining the maximum detection distance of the image acquisition apparatus in the body width direction.

In an embodiment, the value range of the horizontal field of view angle a4 of the image acquisition apparatus is 60° to 160°.

To reduce the costs of the image acquisition apparatus and also take the performance and technical maturity of the image acquisition apparatus into consideration, in an embodiment, a ratio of the horizontal field of view angle a4 to the vertical field of view angle a2 of the image acquisition apparatus is 4:3 or 16:9. In other words, a camera with a lens aspect ratio of 4:3 or 16:9 may be chosen for the image acquisition apparatus.

In an embodiment of the present disclosure, the horizontal field of view angle a4 is equal to 130°, and the vertical field of view angle a2 is equal to 73°.

In consideration of that the image acquisition apparatus can recognize a target object in a process in which the autonomous lawn mower walks, and especially recognize a still obstacle or a moving obstacle with a speed less than a threshold, in an embodiment, a time taken for a target object in a field of view range of the image acquisition apparatus to appear and leave is not less than an image recognition time t1 of the autonomous lawn mower.

In an embodiment, the time taken for the target object to appear and leave is determined by using the following method:

determining the time based on a transverse effective distance in the field of view range of the image acquisition apparatus and a walking speed v of the autonomous lawn mower. The transverse effective distance is a distance of subtracting a blocking distance of a blocking object from the detection distance of the image acquisition apparatus. The blocking object includes the autonomous lawn mower and/or a target object. The target object includes a boundary and an obstacle.

For ease of understanding, the transverse effective distance in the field of view range of the image acquisition apparatus is briefly described below with reference to FIG. 8 to FIG. 10.

As shown in FIG. 8, the detection distance of the image acquisition apparatus is DC, and the blocking distance of the blocking object includes a first distance DI blocked by a grass height HI and a second distance blocked by the autonomous lawn mower. Therefore, it may be obtained that the transverse effective distance in the field of view range of the image acquisition apparatus is IK.

As shown in FIG. 9, the detection distance of the image acquisition apparatus is DK. In fact, DK may also be understood as a distance of subtracting the second distance blocked by the autonomous lawn mower from the detection distance. The blocking distance of the blocking object only includes the first distance DI blocked by the grass height HI. Therefore, it may be obtained that the transverse effective distance in the field of view range of the image acquisition apparatus is IK.

As shown in FIG. 10, the detection distance of the image acquisition image acquisition apparatus is DC, and the blocking distance of the blocking object only includes a first distance DI blocked by a grass height HI. Therefore, it may be obtained that the transverse effective distance in the field of view range of the image acquisition apparatus is IK.

To avoid problems such as that the body crosses a boundary or collides with an obstacle in a steering process of the machine, in an embodiment, the field of view angle includes a third field of view boundary located on a left side of the traveling direction and a fourth field of view boundary located on a right side of the traveling direction in a direction perpendicular to the traveling direction of the body.

A distance between the third field of view boundary and the fourth field of view boundary is 1.2 to 3 times a body width of the autonomous lawn mower. In this way, in one aspect, a blind spot in the body width direction can be reduced or even eliminated, and in another aspect, the problem that machine recognition is affected due to excessively low image resolution can be avoided.

In an embodiment, a value range of the body width is 400 mm to 550 mm.

In an embodiment, the distance between the third field of view boundary and the fourth field of view boundary is determined based on the installation parameters, internal parameters of the image acquisition apparatus, and the preset height h3; the installation parameters at least include an installation height h1; and the internal parameters of the image acquisition apparatus include a horizontal field of view angle a4, where the horizontal field of view angle a4 is configured for determining a detection distance of the image acquisition apparatus in a body width direction.

In an embodiment, the value range of the preset height h3 is 0 mm ≤ h3 ≤ 150 mm, and the value range of the installation height h1 is 150 mm ≤ h1 ≤ 500 mm.

Further, the value range of the horizontal field of view angle a4 of the image acquisition apparatus is 60° ≤ a4 ≤ 160°.

In an embodiment, the internal parameters of the image acquisition apparatus further include a vertical field of view angle a2, and a value range of the vertical field of view angle a2 of the image acquisition apparatus is 48° ≤ a2 ≤ 90°.

In an embodiment, a ratio of the horizontal field of view angle a4 to the vertical field of view angle a2 is 4:3 or 16:9.

Further, the horizontal field of view angle a4 is equal to 130°, and the vertical field of view angle a2 is equal to 73°.

In consideration of that the field of view area of the image acquisition apparatus needs to completely cover the body width in the body width direction, a specific margin is reserved to eliminate a blind spot. In addition, the margin cannot be excessively large, or otherwise the effective image resolution is excessively low, which affects recognition.

Certainly, in other embodiments, the field of view area of the projection of the field of view coverage area of the image acquisition apparatus onto the plane with the preset height includes a third field of view boundary located on a left side of the traveling direction and a fourth field of view boundary located on a right side of the traveling direction in a direction perpendicular to the traveling direction of the body, where a distance between the third field of view boundary or the fourth field of view boundary and a corresponding lateral side of the body is not less than a steering radius of the autonomous lawn mower.

For ease of understanding, the mentioned field of view angle of the image acquisition apparatus is briefly described below with reference to the accompanying drawings.

Referring to FIG. 2, the field of view coverage area of the image acquisition apparatus at least includes a tapered area defined by a point A, a point B, a point C, a point D, and a point E. The point A represents the central point of the image acquisition apparatus. The point B and the point E respectively represent farthest field of view positions in the body width direction. The point C and the point D respectively represent farthest field of view boundary points in a body length direction or the traveling direction.

The tapered area may be, for example, a pyramidal area, or may be a tapered area. In an embodiment, the tapered area may be, for example, a four-sided pyramid.

The image acquisition apparatus has internal parameters. The internal parameters include a horizontal field of view angle and a vertical field of view angle. In the figure, the horizontal field of view (HFOV) is a4 = 4BAE, and the vertical field of view angle (VFOV) is a2 = 4CAD.

When the preset height is h3 = 0, the field of view of the image acquisition apparatus of the autonomous lawn mower is projected onto the horizontal ground. A field of view area of a projection of the field of view coverage area of the image acquisition apparatus onto the horizontal ground is an area defined by the point B, the point C, the point D, and the point E.

The field of view area of the projection of the field of view coverage area onto the horizontal ground has two sides that are respectively far away from the body front end and close to the body front end and are projected onto the horizontal ground in the traveling direction of the body, and are respectively represented by AD and AC. An included angle 4CAD between AD and AC is the vertical field of view angle of the image acquisition apparatus.

It needs to be noted that, the side AC that is projected onto the horizontal ground and is close to the body front end in the traveling direction of the body of the field of view area of the projection of the image acquisition apparatus onto the horizontal ground may fall in rear of the body front end (as shown in FIG. 9), may be blocked by the body, or may fall in front of the body front end (as shown in FIG. 7), resulting in a field of view blind spot at the body front end.

To resolve the problem that a field of view blind spot exists at the body front end when the autonomous lawn mower walks on the horizontal ground, a distance between the side AC and the body front end is equal to 0, as shown in FIG. 10.

In FIG. 10 and FIG. 11, a field of view blind spot may still exist in a body height direction of the body front end. When the preset height is greater than 0, a timely response cannot be made to an object that suddenly appears in the direction of a height 2 near the body front end, which tends to cause a danger. To keep the blockage of the body from affecting the field of view of image acquisition and eliminate a field of view blind spot that exists in the direction of the height h2 of the body of the body front end, in an embodiment, referring to FIG. 4, when the image acquisition apparatus is not rotatable, during installation, the installation angle a1 is adjusted to make AC at least partially overlap the body front end and at least partially overlap a tangent of the body front end. In another embodiment, if the image acquisition apparatus is rotatable, i.e., the image acquisition apparatus has a lens rotation angle a3, during installation, the rotation angle a3 may be first determined from the perspective of protecting the image acquisition apparatus (for example, against rain or snow), and then the installation angle a1 is adjusted to make AC at least partially overlap the body front end and at least partially overlap a tangent of the body front end.

In an embodiment, referring to FIG. 3, FIG. 4, and FIG. 5, AC at least partially overlaps the tangent of the body front end, to eliminate a blind spot at the body front end. In other words, AC is tangent to the body front end. In this case, AC is perpendicular to the horizontal ground, and the installation height of the image acquisition apparatus is h1 = AC = d.

In this scenario, the field of view area of the projection of the field of view coverage area onto the horizontal ground includes a field of view boundary BE close to the body front end and a field of view boundary FG far away from the body front end in the traveling direction of the body. It may be understood that the field of view boundary BE is a line segment passing through the point C, and the field of view boundary FG is a line segment passing through the point D.

The field of view area of the projection of the field of view coverage area onto the horizontal ground is a trapezoidal area defined by the point B, the point E, a point F, and a point G. FIG. 3 and FIG. 5 schematically show the body width (represented by XY).

In an embodiment, referring to FIG. 6, when the autonomous lawn mower performs a mowing action in the working area with the preset height h3 greater than 0, in FIG. 6, HI represents the preset height h3. A field of view area of the projection of the field of view coverage area onto the plane with the preset height h3 greater than 0 may be an area defined by a point P, a point M, a point H, and a point Q. PM is parallel to BC; MQ is parallel to CE; HM is parallel to CD; and MC = HI.

It may be understood that when the preset height is h3 = 0, the field of view area of the projection of the field of view coverage area onto the horizontal ground may be the area defined by the point B, the point C, the point D, and the point E.

In a scenario in which the preset height h3 is greater than 0, the field of view area of the projection of the field of view coverage area onto the plane with the preset height h3 greater than 0 includes a first field of view boundary far away from the body front end and a second field of view boundary PQ close to the body front end in the traveling direction of the body. Although the first field of view boundary is not shown in FIG. 6, it may be understood that the first field of view boundary is located in a plane (a plane in which HM is located in FIG. 7) at a height from the horizontal ground being h3 greater than 0. The first field of view boundary is a line segment passing through the point H, and the first field of view boundary is parallel to the field of view boundary FG of the projection onto the horizontal ground. The second field of view boundary PQ is a line segment passing through the point M, and the second field of view boundary PQ is parallel to the field of view boundary BE of the projection onto the horizontal ground. The field of view area of the projection of the field of view coverage area onto the plane with the preset height h3 greater than 0 is a trapezoidal area defined by four vertices of the first field of view boundary and the second field of view boundary PQ that pass through the point H and is parallel to the field of view boundary FG of the projection onto the horizontal ground.

The installation of the image acquisition apparatus is briefly described below.

In the traveling direction of the body or the direction of the vertical field of view angle:

Constraint condition 1: A distance between an object captured by the image acquisition apparatus of the machine (short for the autonomous lawn mower) and the body front end of the machine should be greater than the response distance of the machine. The response distance is related to at least one of the braking distance, the steering distance, or the image recognition distance, and may be, for example, the braking distance or the steering distance or the braking distance+steering distance, or may be a sum of the braking distance (or the steering distance or the braking distance+steering distance) and the image recognition distance.

Constraint condition 2: The detection blind spot of the image acquisition apparatus of the machine is less than or equal to the blind spot threshold. The blind spot threshold cannot be excessively large. Therefore, the blind spot threshold is preset to 500 mm.

Constraint condition 3: The body of the machine should not appear within a near-end field of view boundary of the field of view area of the projection of the field of view coverage area of the image acquisition apparatus onto the horizontal ground or the grass height in the traveling direction of the body.

In consideration of that the autonomous lawn mower has a variety of members, to eliminate the adverse impact of the parts on the image acquisition apparatus, therefore, the installation parameter of the image acquisition apparatus is configured as a first parameter, and the image acquisition apparatus is further kept from being blocked by other members of the autonomous lawn mower, i.e., the other members are kept from falling within the detection range of the image acquisition apparatus.

Constraint condition 4: The time (the image recognition time) required for the machine to recognize an image should be less than or equal to a time from an object appearing at a far-end field of view boundary of the field of view area of the projection of the field of view coverage area of the image acquisition apparatus onto the horizontal ground or the plane with the preset height in the traveling direction of the body (starting to capture an image of the object) to the object leaving the near-end field of view boundary of the field of view area of the projection of the field of view coverage area of the image acquisition apparatus onto the horizontal ground or the plane with the preset height in the traveling direction of the body (completing the capturing of the image of the object).

In the body width direction or the direction of the horizontal field of view angle:

Constraint condition 5: A field of view range covered by the horizontal field of view angle of the image acquisition apparatus should meet that no collision occurs with an obstacle during steering.

For ease of understanding, the factors to be taken into consideration in the installation of the image acquisition apparatus are briefly described below with reference to FIG. 7 to FIG. 11.

In the figure: a height of the image acquisition apparatus from the ground is h1 (mm); a height of the autonomous lawn mower from the ground is h2 (mm); the preset height (for example, the grass height or the obstacle height) is h3 (mm); the traveling speed of the autonomous lawn mower is v (mm/s); the image processing time of the image acquisition apparatus is t1 (s); the braking time (a time from normal driving to complete stop) of the machine is t2 (s); the installation angle of the image acquisition apparatus is a1 (°); the vertical field of view angle of the image acquisition apparatus is a2 (°); the lens rotation angle of the image acquisition apparatus is a3 (°); a length of a projection CD of a boundary of the vertical field of view angle of the image acquisition apparatus onto the horizontal ground is x1 (mm); a length of a distance DK between a projection of the far-end field of view boundary of the image acquisition apparatus in the traveling direction of the body onto the horizontal ground and the body front end is x2 (mm); a length of a horizontal projection HM of the grass height (or obstacle) within the field of view angle of the image acquisition apparatus is x3 (mm); a length of a distance HN between the horizontal projection of the grass height (or obstacle) within the field of view angle of the image acquisition apparatus and the body front end is x4 (mm); the braking distance of the autonomous lawn mower in the braking process is x5 (mm); a cantilever length configured for installing the image acquisition apparatus is L (mm); a distance between a cantilever installation point and the body front end is k (mm), the cantilever installation point may be located on a front side of the lawn mower or may be located on a rear side of the lawn mower, and the front side is a side in the traveling direction of the lawn mower; and the set distance is y (mm), the set distance y is a distance between the cutting deck and the housing in a transverse direction, and the transverse direction is a horizontal direction perpendicular to the traveling direction of the lawn mower. A value range of the cantilever length L (OA) is $0 \leq L$. A value range of k is $0 \leq k \leq b$, where b represents the body width. It may be understood that the value range of k represents that the image acquisition apparatus may be located at the body front end and disposed toward the rear.

When the autonomous lawn mower is located on the horizontal ground, which in fact may also be understood as a special scenario in which the preset height or the grass height or the obstacle height is h3 = 0, for an object on the horizontal ground:

$$x1 = \text{h}1\{tan(a2/2 + a3) + tan(a2/2 - a3)\},$$

and

$$x2 = \text{h}1tan(a2/2 + a3) + Lcosa1 - k.$$

x0 = $Lcos\alpha1$ - $k$, where x0 is the installation distance of the image acquisition apparatus, representing a horizontal distance between the image acquisition apparatus and the body front end 106. An installation constraint in the vertical field of view angle at least includes one of the following:

Constraint A: A distance between a field of view boundary of the projection onto the horizontal ground and the body front end is greater than or equal to the response distance of the autonomous lawn mower.

A1: When a boundary line or an obstacle appears in front of the autonomous lawn mower, in any scenario in which the autonomous lawn mower avoids crossing a boundary or avoids an obstacle in a braking manner:

A11: the response distance is only related to the braking distance,

$$x2 = \text{h}1tan(a2/2 + a3) + Lcosa1 - k \geq x5,$$

A12: the response distance is related to the braking distance and the image recognition distance, and

$$x2 = \text{h}1tan(a2/2 + a3) + Lcosa1 - k \geq t1v + x5,$$

A13: the response distance is related to the braking distance, the image recognition distance, and the set

distance,

$$x2 = h1tan(a2/2 + a3) + Lcosa1 - k \geq t1v + x5 - y.$$

In an embodiment, the braking distance x5 is approximately equal to vt2. Therefore, when the response distance is only related to the braking distance,

$$x2/v = h1\{tan(a2 / (2 + a3)) + Lcosa1 - k\}/v \geq t2.$$

**In** an embodiment, the image acquisition apparatus is installed at the body front end. **In** this case, k = 0.
**In** an embodiment, a range of the installation distance x0 of the image acquisition apparatus is 0 mm to 220 mm.
A2: When a boundary line or an obstacle appears in front of the autonomous lawn mower, in any scenario in which the autonomous lawn mower avoids crossing a boundary in a steering manner or steers to walk along an edge or avoids an obstacle, the steering distance may be adopted. For example, a steering radius r is used in place of x5 in the foregoing formula to obtain an installation constraint in the vertical field of view angle in the steering scenario. For brevity, this is no longer excessively described in this embodiment.
Constraint C: A time taken for a target object on a horizontal ground to appear and leave is not less than the image recognition time t1 of the autonomous lawn mower. The target object may be, for example, a target object, especially a branch, a rock, or another still obstacle, or may be a boundary line or another object.
This is expressed by using a formula as follows:

$$\frac{x1}{v} = \frac{h1\{tan(a2/2+a3)+tan(a2/2-a3)\}}{v} \geq t1.$$

In an embodiment, when the installation height h1 of the image acquisition apparatus is greater than or equal to a height 2 of the machine,

$$x2 = h1tan(a2/2 + a3) + Lcosa1 - k,$$

which may be converted into:

$$x2 = h1tan(a2/2 + a3) + \frac{h1-h2}{tana1}.$$

In an embodiment, a range of the body height 2 is 190 mm to 220 mm.
In an embodiment, when a far-end field of view boundary (for example, the second side AC of the vertical field of view angle) of the image acquisition apparatus close to the body front end is tangent to at least partially overlaps the body front end, in this case, x1 = x2. Therefore,

$$h1\{tan(a2/2 + a3) + tan(a2/2 - a3)\} = h1tan(a2/2 + a3) + Lcosa1 - k =$$
$$h1tan(a2/2 + a3) + \frac{h1-h2}{tana1},$$

it can be further obtained that:

$$h1tan(a2/2 - a3) = \frac{h1-h2}{tana1}.$$

Similarly, when the autonomous lawn mower is on a lawn with the preset height h3, for an object on the plane with the preset height:

$$x3 = (h1 - h3)\{tan(a2/2 + a3) + tan(a2/2 - a3)\},$$

$$x4 = (h1 - h3)tan(a2/2 + a3) + Lcosa1 - k,$$

and

where x0 = $Lcosa1 - k$.

An installation constraint in the vertical field of view angle at least includes one of the following:

Constraint Q: A distance between the field of view boundary (i.e., the first field of view boundary) of the projection onto the plane with the preset height and the body front end is greater than or equal to the response distance of the autonomous lawn mower:

Q1: When a boundary line or an obstacle appears or is detected in front of the autonomous lawn mower, in a scenario in which the autonomous lawn mower avoids crossing a boundary or steers to walk along an edge in a steering manner:

Q11: the response distance is only related to the braking distance,

$$x4 = (h1 - h3)tan(a2/2 + a3) + Lcosa1 - k \geq x5,$$

Q12: the response distance is related to the braking distance and the image recognition distance, and

$$x4 = (h1 - h3)tan(a2/2 + a3) + Lcosa1 - k \geq t1v + x5,$$

Q13: the response distance is related to the braking distance, the image recognition distance, and the set distance,

$$x4 = (h1 - h3)tan(a2/2 + a3) + Lcosa1 - k \geq t1v + x5 - y.$$

**In** an embodiment, the braking distance x5 is approximately equal to vt2.

Q2: When a boundary line or an obstacle appears in front of the autonomous lawn mower, in a scenario in which the autonomous lawn mower avoids crossing a boundary in a steering manner or steers to walk along an edge, the steering distance may be adopted. For example, a steering radius r is used in place of x5 in the foregoing formula to obtain an installation constraint in the vertical field of view angle in the steering scenario. For brevity, this is no longer excessively described in this embodiment.

Constraint P: The image recognition time t1 of the autonomous lawn mower is less than or equal to a time taken for a target object on a plane with the preset height to appear and leave. In other words, a time from the target object appearing at the first field of view boundary (the camera is ready to capture an image of the object) to the target object leaving the second field of view boundary (the camera completes the capturing of the image of the object) should be greater than or equal to the time required for the machine to recognize an image. The target object may be, for example, a target object, especially a branch, a rock, or another still obstacle, or may be a boundary line or another object.

This is expressed by using a formula as follows:

$$\frac{x3}{v} = \frac{(h1-h3)\{tan(a2/2+a3)+tan(a2/2-a3)\}}{v} \geq t1.$$

In an embodiment, if the image acquisition apparatus is installed on the body and is not rotatable around an optical axis of the lens thereof, the factors to be taken into consideration in the installation of the image acquisition apparatus are briefly described below with reference to FIG. 7 to FIG. 11.

In the figure: the horizontal distance between the image acquisition apparatus and the body front end is x0 (mm); the preset height or the grass height or the obstacle height is h3 (mm); the traveling speed of the autonomous lawn mower is v (mm/s); the image processing time of the image acquisition apparatus is t1 (s); the braking time (a time from normal driving to complete stop) of the machine is t2 (s); the installation angle of the image acquisition apparatus is a1 (°); the vertical field of view angle of the image acquisition apparatus is a2 (°); a length of a projection CD of a boundary of the vertical field of view angle of the image acquisition apparatus onto the horizontal ground is x1 (mm); a length of a distance DK between a projection of the far-end field of view boundary of the image acquisition apparatus in the traveling direction of the body onto the horizontal ground and the body front end is x2 (mm); a length of a horizontal projection HM of the grass height (or obstacle) within the field of view angle of the image acquisition apparatus is x3 (mm); a length of a distance HN between the horizontal projection of the grass height (or obstacle) within the field of view angle of the image acquisition apparatus and the body front end is x4 (mm); the braking distance of the autonomous lawn mower in the braking process is x5 (mm); and a body height of the autonomous lawn mower is h2 (mm).

When the autonomous lawn mower is located on the horizontal ground, which in fact may also be understood as a special scenario in which the preset height or the grass height or the obstacle height is h3 = 0, for an object on the horizontal ground:

$$x1 = h1\{tan(a2 \,/\, 2 + a3) + tan(a2 \,/\, 2 - a3)\},$$

and

$$x2 = h1tan(a2/2 + a3) + x0.$$

An installation constraint in the vertical field of view angle should meet at least one of the following constraints: Constraint 1: A distance between a field of view boundary of the projection onto the horizontal ground and the body front end is greater than or equal to the response distance of the autonomous lawn mower.

For ease of description, when a boundary line or an obstacle appears in front of the autonomous lawn mower, in any scenario in which the autonomous lawn mower avoids crossing a boundary or avoids an obstacle in a braking manner and the response distance is only related to the braking distance,

$$x2 = h1tan(a2/2 + a3) + x0 \geq x5,$$

because the braking distance $x5$ is related to the braking time t2 and the traveling speed v, in an embodiment, the braking distance x5 is approximately equal to vt2. When a boundary line or an obstacle appears in front of the autonomous lawn mower, in any scenario in which the autonomous lawn mower avoids crossing a boundary or avoids an obstacle in a braking manner and the response distance is only related to the braking distance, x2 = h1$tan$(a2/2 + a3) + x0, and it may be obtained that:

$$x2/v = (h1tan(a2 \,/\, 2 + a3) + x0)/v \geq t2.$$

Constraint 2: A time taken for a target object on a horizontal ground to appear and leave is not less than the image recognition time t1 of the autonomous lawn mower. The target object may be, for example, a target object, especially a branch, a rock, or another still obstacle, or may be a boundary line or another object.

This is expressed by using a formula as follows:

$$x1/v = h1\{tan(a2 \,/\, 2) + a3 + tan(a2 \,/\, 2 - a3)\}/v \geq t1.$$

Constraint 3: The distance between the second field of view boundary and the body front end is less than or equal to a preset blind spot distance, and the body of the machine does not appear in the field of view.

In consideration of that the field of view blind spot affects the safety of the machine, therefore, the field of view blind spot should not be excessively large. When the preset height is 0, the preset blind spot distance is 150 mm. In this case, a constraint that should be met is expressed by using a formula as follows:

$$0 \leq h2 - h1tan(a2/2 - a1) \leq 150.$$

In the present disclosure, the condition of the boundary is:

$$0° \leq a3 \leq 90°,$$

$$0° \leq a1 \leq 180°,$$

and

$$0 < h2 \leq h1.$$

If the installation position of the image acquisition apparatus is excessively high, shaking may occur, and if the installation position is excessively low, wastewater, dirt, dust, or the like may contaminate the image acquisition apparatus. Therefore, in the present disclosure, a constraint that the installation height of the image acquisition apparatus should meet is:

$$200mm \leq h1 \leq 500mm.$$

If the field of view angle of the image acquisition apparatus is excessively large, an optical distortion of an image increases. Therefore, in the present disclosure,

$$45° \leq a2 \leq 90°.$$

Similarly, when the autonomous lawn mower is on a lawn with the grass height, for an object on the plane with the preset height h3 greater than 0:

$$x3 = (h1 - h3)\{tan(a2/2 + a3) + tan(a2/2 - a3)\},$$

and

$$x4 = (h1 - h3)tan(a2/2 + a3) + x0.$$

In the present disclosure, the constraint condition that should be met is:

$$x4 = (h1 - h3)tan(a2/2 + a3) + x0 \geq x5,$$

$$\frac{x4}{v} = \frac{(h1-h3)tan(a2/2+a3)+x0}{v} \geq t2,$$

$$x3/v = (h1 - h3)\{tan(a2 \,/\, 2 + a3) + tan(a2 \,/\, 2 - a3)\}/v \geq t1,$$

$$0 \leq h2 - (h1 - h3)tan(a2/2 - a3) \leq 50mm,$$

$$0 \leq a1 \leq 180°,$$

$$0 \leq a3 \leq 90°,$$

$$0 < h2 \leq h1,$$

$$45° \leq a2 \leq 90°,$$

$$200 \text{ mm} \leq h1 \leq 500 \text{ mm},$$

and

$$0 \leq h3 \leq 150 \text{ mm}.$$

In the present disclosure, the machine needs to have a compact structure and a simple and aesthetic appearance, and the safety performance (blind spot) of the machine needs to be ensured. In addition, the appropriateness of selecting field of view angles and installation angles of the image acquisition apparatus is verified. For example, it is verified in the length direction that there is at least a distance of 2 seconds between the body and the farthest end of the field of view, to ensure safety and also avoid an excessively large blind spot. It is verified in the width direction that the body width needs to be completely covered, and a specific margin (0.5 times of the width of the machine) is reserved to eliminate a blind spot. However, the margin cannot be excessively large, or otherwise the effective image resolution is excessively low, which affects recognition. For the above purpose, a further determined range is as follows:

$$200 \text{ mm} \leq h1 \leq 423 \text{ mm},$$

$$0° \leq a1 \leq 107°,$$

$$30° \leq a3 \leq 68°,$$

$$50° \leq a2 \leq 90°,$$

and

$$0 \leq x0 \leq 83 \text{ mm}.$$

**In** another embodiment, in consideration of safety, when the machine runs to a boundary of a lawn, if an obstacle (for example, a wall, or a fence) taller than the lawn is present at the boundary of the lawn, the obstacle should be captured in the field of view of the camera, and the field of view should not be completely covered by the vegetation. For a position at a distance of b/2 from the center of the field of view of the camera in the width direction (b is the body width), if a space taller than the vegetation cannot be detected in the field of view of the camera and it is directly considered that the machine is safe, the machine may continue to move toward the obstacle, and as a result the machine collides with the obstacle.

Therefore, a constraint condition 6 may be determined according to an extreme case. In the constraint condition 6 (or referred to as an extreme case), an obstacle is tightly joined to a lateral side of the machine, i.e., at the position at a distance of b/2 from the center of the field of view of the camera in the width direction, an obstacle taller than the vegetation is right detected in the field of view of the camera. In contrast, when it is detected in the field of view of the camera that a distance between the obstacle taller than the vegetation and the center of the machine is larger, the safety attribute of the machine is higher, i.e., at the position at the distance of b/2 from the center of the field of view of the camera in the width direction, a height detectable in the field of view of the camera should be greater than or equal to a height h3 of the vegetation.

The lateral constraint conditions are described below with reference to FIG. 6, FIG. 7, FIG. 15, and FIG. 16. The field of view of the camera is an irregular ellipsoid. To simplify calculation, the shape can be approximately considered as a triangle. In FIG. 7, $AS = \frac{h1}{cosa3}$, and in FIG. 6, $BS = SE = \frac{h1}{cosa3}tan\frac{a4}{2}$.

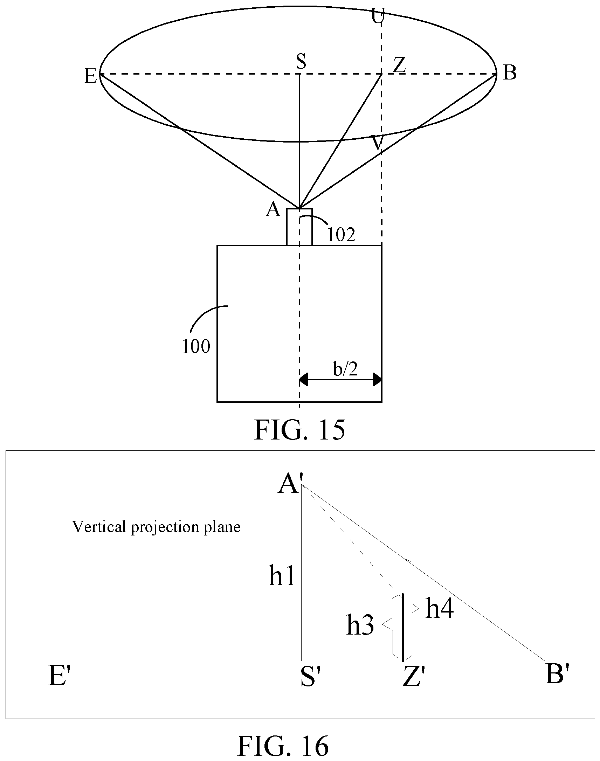

FIG. 15 is a schematic diagram of a position relationship between a projection of the field of view of the camera onto the horizontal plane and a projection of the body on the horizontal plane. In the figure, UV is parallel to DC, UV is colinear with the lateral side of the body of the lawn mower, and a distance between UV and DC is a half of the width (b/2) of the lawn mower.

FIG. 16 is a schematic diagram of the field of view of the camera in the direction of BC. Due to the blockage of vegetation, an obstacle cannot be detected in the field of view of the camera corresponding to the dash line in the figure. Therefore, a height of the field of view at Z' should be greater than or equal to the height of the vegetation before an obstacle near Z' can be detected, thereby reducing a probability that the machine collides with an obstacle. As can be learned from analysis, at the position at the distance of b/2 from the center of the field of view of the camera in the width direction, a constraint condition of keeping the machine from colliding with an obstacle includes: at the position at the distance of b/2 from the center of the field of view of the camera in the width direction, the height detectable in the field of view of the camera is h4 ≥ the height h3 of the vegetation.

According to similar triangles, it can be obtained that:

$$\frac{h4}{h1} = \frac{\frac{h1}{cosa3}tan\frac{a4}{2} - \frac{b}{2}}{\frac{h1}{cosa3}tan\frac{a4}{2}},$$

and

$$h4 = \frac{2h1tan\frac{a4}{2} - bcosa3}{2tan\frac{a4}{2}},$$

**in this** case, h4 ≥ h3 is:

$$\frac{2h1tan\frac{a4}{2} - bcosa3}{2tan\frac{a4}{2}} \geq h3.$$

For the above purpose, a further determined range is as follows:

the value range of the installation height h1 is 218 mm ≤ h1 ≤ 434 mm; the value range of the installation distance x0 is 0 ≤ x0 ≤ 83 mm; the value range of the horizontal installation angle a1 is 0° ≤ a1 ≤ 86°; the value range of the vertical field of view angle a2 is 45° ≤ a2 ≤ 90°; and the value range of the lens rotation angle a3 is 52° ≤ a3 ≤ 68°.

In the present disclosure, in combination with actual running conditions, eventually the installation parameters and the internal parameters of the image acquisition apparatus are determined as follows: h1 = 220 mm, a2 = 73 degrees, a1 = 38 degrees, a1 = 53 degrees, a4 = 130 degrees, and x0 = 17 mm.

When the image acquisition apparatus is installed according to the foregoing parameters (220 mm, 17 mm, 38 degrees, 53 degrees, and 73 degrees), the distance between the first field of view boundary and the body front end is 1600 mm.

In an embodiment, if the image acquisition apparatus is installed on the body and is not rotatable around an optical axis of the lens thereof, as shown in FIG. 12, during the installation of the image acquisition apparatus, the centerline of the image acquisition apparatus is perpendicular to an installation plane thereof. In this case, it can be learned that the lens rotation angle a3 of the image acquisition apparatus is equal to the installation angle a1 of the image acquisition apparatus, i.e., a3 = a1. The factors to be taken into consideration in the installation of the image acquisition apparatus are briefly described below with reference to FIG. 12 to FIG. 14.

When the autonomous lawn mower is located on the horizontal ground, which in fact may also be understood as a special scenario in which the preset height or the grass height or the obstacle height is h3 = 0, for an object on the horizontal ground:

$$x1 = h1\{tan(a2 / 2 + a1) + tan(a2 / 2 - a1)\},$$

$$x2 = h1 tan(a2/2 + a1) + x0,$$

$$x2 = h1 tan(a2/2 + a3) + x0 \geq x5,$$

$$x2/v = (h1 tan(a2 / 2 + a1) + x0)/v \geq t2,$$

$$x1/v = h1\{tan(a2 / 2) + a1 + tan(a2 / 2 - a1)\}/v \geq t1,$$

and

$$0 \leq h2 - h1 tan(a2/2 - a1) \leq 50\ mm.$$

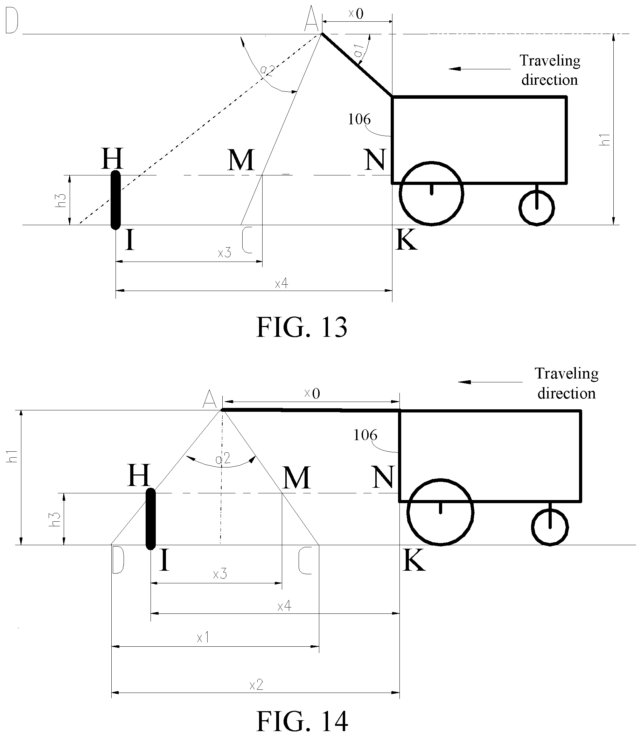

In the present disclosure, due to the impact of light rays on the image acquisition apparatus in the use process of the image acquisition apparatus, light rays should be kept from directly entering the field of view of the image acquisition apparatus, therefore, as shown in FIG. FIG. 13, for the first side (also referred to as a left boundary) AD and the second side (also referred to as a right boundary) AC of the angle range of the field of view area of the image acquisition apparatus in the traveling direction of the body, it is a critical state when the left boundary AD is horizontal. In this case, a3 + a2/2 ≤ 90°, and a3 = a1. Therefore, the boundary condition that should be met is:

$$a1 + a2/2 \leq 90°.$$

Because the image acquisition apparatus should obtain an as wide as possible field of view range in the use process, to improve the safety of the machine, as shown in FIG. 14, it is a critical state when a field of view centerline of the field of view of the image acquisition apparatus is perpendicular to the horizontal plane. In this case, a3 = a1 = 0°. Therefore, the boundary condition is:

$$0° \leq a1.$$

Other constraints are:

$$200\ mm \leq h1 \leq 500\ mm,$$

and

$$45° \leq a2 \leq 90°.$$

Similarly, when the autonomous lawn mower is on a lawn with the grass height, for an object on the plane with the preset height h3 greater than 0:

$$x3 = (h1 - h3)\{tan(a2/2 + a1) + tan(a2/2 - a1)\},$$

and

$$x4 = (h1 - h3)tan(a2/2 + a1) + x0.$$

In the present disclosure, the constraint condition that should be met is:

$$x4 = (h1 - h3)tan(a2/2 + a1) + x0 \geq x5,$$

$$\frac{x4}{v} = \frac{(h1-h3)tan(a2/2+a1)+x0}{v} \geq t2,$$

$$x3/v = (h1 - h3)\{tan(a2 / (2 + a1)) + tan(a2 / 2 - a1)\}/v \geq t1,$$

$$0 \leq h2 - (h1 - h3)tan(a2/2 - a1) \leq 50\ mm,$$

$$a1 + a2/2 \leq 90°,$$

$$0 \leq a1,$$

$$45° \leq a2 \leq 90°,$$

$$200\ mm \leq h1 \leq 500\ mm,$$

and

$$0 \leq h3 \leq 150\ mm.$$

**In** the present disclosure, the machine needs to have a compact structure and a simple and aesthetic appearance, and the safety performance (blind spot) of the machine needs to be ensured. **In** addition, the appropriateness of selecting field of view angles and installation angles of the image acquisition apparatus is verified. For example, it is verified in the length direction that there is at least a distance of 2 seconds between the body and the farthest end of the field of view, to ensure safety and also avoid an excessively large blind spot. It is verified in the width direction that the body width needs to be completely covered, and a specific margin (0.5 times of the width of the machine) is reserved to eliminate a blind spot. However, the margin cannot be excessively large, or otherwise the effective image resolution is excessively low, which affects recognition. For the above purpose, a further determined range is as follows:

$$200 \leq h1 \leq 400,$$

$$30° \leq a1 \leq 45°,$$

$$30° \leq a3 \leq 45°,$$

$$60° \leq a2 \leq 80°,$$

and

$$0 \leq x0 \leq 40 \text{ mm}.$$

In the present disclosure, in combination with actual running conditions, eventually the installation parameters and the internal parameters of the image acquisition apparatus are determined as follows: h1 = 220 mm, a2 = 73 degrees, a1 = a3 = 38 degrees, a4 = 130 degrees, and x0 = 17 mm.

When the image acquisition apparatus is installed according to the foregoing parameters (220 mm, 17 mm, 38 degrees, and 73 degrees), the distance between the first field of view boundary and the body front end is 808 mm.

In an embodiment, the field of view range covered by the horizontal field of view angle of the image acquisition apparatus should meet that no collision occurs with an obstacle during steering. For example, the constraint condition in the body width direction includes:

Constraint B: The horizontal field of view angle of the image acquisition apparatus should meet that a boundary line or an obstacle is not touched during steering or a distance to a boundary line or an obstacle in a steering process is within an error range.

B1: The field of view area of the projection of the field of view coverage area of the image acquisition apparatus onto the plane with the preset height includes a third field of view boundary located on a left side of the traveling direction and a fourth field of view boundary located on a right side of the traveling direction in a direction perpendicular to the traveling direction of the body.

A distance between the third field of view boundary or the fourth field of view boundary and a corresponding lateral side of the body is not less than a steering radius of the autonomous lawn mower.

Referring to FIG. 3 and FIG. 5, when the autonomous lawn mower is located on the horizontal ground, the installation height of the image acquisition apparatus is h1 (unit: mm, millimeter), and the horizontal field of view angle of the image acquisition apparatus is a4 (unit: degree, °). A distance between the projections of the centerline of the image acquisition apparatus and the boundary of the horizontal field of view angle onto the horizontal ground is x6 (unit: mm, millimeter); the steering radius of the machine is r (unit: mm, millimeter); and the width XY of the machine is b (unit: mm, millimeter). A constraint in the horizontal field of view angle may be learned:

$$x6 - b/2 \geq r, \text{ and}$$

$$x6 = h1 \tan(a4/2).$$

As can be obtained from the above:

$$h1 \tan(a4/2) - b/2 \geq r.$$

Further, it may be obtained that when the autonomous lawn mower is located on a plane with the preset height h3 in the working area, the constraint in the horizontal field of view angle is:

$$(h1 - h3) \tan(a4/2) - r \geq b/2.$$

B2: The field of view area of the projection of the field of view coverage area of the image acquisition apparatus onto the horizontal ground with the preset height h3 being 0 includes a field of view boundary located on a left side of the traveling direction and a field of view boundary located on a right side of the traveling direction in a direction perpendicular to the traveling direction of the body. A distance between the two field of view boundaries is 1.8 times to 2.2 times the body width of the autonomous lawn mower.

B3: The field of view area of the projection of the field of view coverage area of the image acquisition apparatus onto the plane with the preset height (for example, grass height) h3 being greater than 0, for example, h3 = 150 mm, includes a third field of view boundary located on a left side of the traveling direction and a fourth field of view boundary located on a right side of the traveling direction in a direction perpendicular to the traveling direction of the body, where a distance between the third field of view boundary and the fourth field of view boundary is 1.6 times to twice the body width of the autonomous lawn mower.

This is expressed by using a formula as: $1.6b \leq 2(h1 - h3)\tan(a4/2) \leq 2b$.

Further, the image acquisition apparatus may be, for example, a depth camera, installed on the body, and configured to acquire an image in the traveling direction of the machine.

Furthermore, the depth camera is further configured to recognize an obstacle in the image, to be specific, when an obstacle appears in the image, determine a type of the obstacle.

The obstacle may be a still object or may be a moving object. The type of the obstacle includes, but is not limited to, a rock, a tree, or another lifeless object, and an animal, person, or another living object.

The depth camera depends on visual artificial intelligence (AI) to implement the recognition of an obstacle. In a manner, the depth camera may recognize an obstacle based on a deep learning algorithm with supervised learning, for example, recognize the type of the obstacle based on a pre-trained convolutional neural network model. It may be understood that the depth camera may implement the recognition of an obstacle based on another machine learning or deep learning algorithm. This is not specifically limited in this embodiment.

Further, the depth camera may be a monocular camera, a binocular camera, or a trinocular stereo camera.

In an optional implementation, the depth camera is a trinocular stereo camera to implement three-dimensional recognition of an obstacle.

Further, the depth camera is installed at a top front end or a front top end of the body of the machine.

Further, the depth camera is installed at an externally disposed anti-collision housing (for example, a cantilever) in an embedded manner, to avoid damage from collision.

In this embodiment, an installation height of the depth camera is 220 mm. The depth camera is installed at a top of the body of the machine, and is disposed facing downward. A horizontal installation angle is set to 38°, a lens rotation angle is set to 53°, a vertical field of view angle of the depth camera is set to 73°, and a horizontal field of view angle is set to 130°.

In another embodiment, an installation height of the depth camera is 220 mm. The depth camera is installed at a top of the body of the machine, and is disposed facing downward. A lens rotation angle and a horizontal installation angle are equal, and are both 38°, a vertical field of view angle of the depth camera is set to 73°, and a horizontal field of view angle is set to 130°.

The foregoing embodiments only describe several implementations of the present invention, which are described specifically and in detail, but cannot be construed as a limitation to the patent scope of the present invention. It should be noted that for a person of ordinary skill in the art, several transformations and improvements can be made without departing from the idea of the present invention. These transformations and improvements belong to the protection scope of the present invention.

The foregoing embodiments only describe several implementations of the present invention, which are described specifically and in detail, but cannot be construed as a limitation to the patent scope of the present invention. It should be noted that for a person of ordinary skill in the art, several transformations and improvements can be made without departing from the idea of the present invention. These transformations and improvements belong to the protection scope of the present invention.

## Claims

1. An autonomous lawn mower, wherein the autonomous lawn mower is capable of autonomously moving and performing mowing work in a preset working area, and comprises:

   a body, having a body front end and a body rear end that are opposite in a traveling direction of the autonomous lawn mower;
   a movement module, driving the autonomous lawn mower to move;
   a mowing assembly, cutting grass in the working area; and
   an image acquisition apparatus, disposed at a top of the body front end, and obtaining an image in the traveling direction of the body;
   wherein
   an area covered by a projection of a field of view angle of the image acquisition apparatus onto a horizontal plane with a preset height is a field of view area of the image acquisition apparatus, and the field of view area comprises a first field of view boundary far away from the body front end and a second field of view boundary close to the body front end in the traveling direction of the autonomous lawn mower;
   wherein
   the image acquisition apparatus is configured to be installed according to preset installation parameters, so that the first field of view boundary is at a first distance from the body front end, and the second field of view boundary is at a second distance from the body front end;
   wherein
   the first distance is greater than or equal to a response distance of the autonomous lawn mower, the response distance is a distance required for the autonomous lawn mower to avoid a target object, and the target object comprises a boundary and an obstacle; and
the second distance is less than or equal to 500 mm.

**2.** The autonomous lawn mower according to claim 1, wherein

the response distance comprises at least one of a braking distance and an image recognition distance, wherein the braking distance is a traveling distance of the autonomous lawn mower for avoiding the target object in a braking manner; and the image acquisition apparatus has an image recognition time, and the image recognition distance is a traveling distance of the autonomous lawn mower in the image recognition time.

**3.** The autonomous lawn mower according to claim 2, wherein

the first distance is greater than or equal to a sum of the braking distance of the autonomous lawn mower and the image recognition distance, wherein
the braking distance is at least related to one of the following movement parameters of the autonomous lawn mower: a braking time and a traveling speed of the autonomous lawn mower; and the image recognition distance is related to the image recognition time of the image acquisition apparatus and the traveling speed of the autonomous lawn mower.

**4.** The autonomous lawn mower according to claim 3, wherein

a value range of the traveling speed is 0.25 m/s to 0.5 m/s;
a value range of the braking time is 50 ms to 2 s;
a value range of the braking distance is 12.5 mm to 1000 mm; and
a value range of the image recognition time is 50 ms to 500 ms, and the image recognition distance ranges from 125 mm to 250 mm.

**5.** The autonomous lawn mower according to claim 1, wherein

the first distance and the second distance are separately determined based on the installation parameters of the image acquisition apparatus, internal parameters of the image acquisition apparatus, and the preset height h3, wherein
the installation parameters at least comprise an installation height h1, an installation distance x0, and an installation angle, wherein the installation height h1 is a height of the image acquisition apparatus from a horizontal ground, the installation distance x0 is a horizontal distance of the image acquisition apparatus from the body front end, and the installation angle comprises a lens rotation angle a3, and the lens rotation angle a3 is an included angle between a lens central axis of the image acquisition apparatus and a vertical direction; and
the internal parameters of the image acquisition apparatus comprise a vertical field of view angle a2.

**6.** The autonomous lawn mower according to claim 1, wherein the second distance is less than or equal to a predetermined blind spot threshold.

**7.** The autonomous lawn mower according to claim 6, wherein a value range of the preset height h3 is $0\ mm \leq h3 \leq 150\ mm$, and a value range of the installation height h1 is $150\ mm \leq h1 \leq 500\ mm$.

**8.** The autonomous lawn mower according to claim 7, wherein a value range of the vertical field of view angle a2 is $45° \leq a2 \leq 90°$.

**9.** The autonomous lawn mower according to claim 7, wherein a value range of the lens rotation angle a3 is $0 \leq a3 \leq 75°$.

**10.** The autonomous lawn mower according to claim 7, wherein a value range of the installation distance x0 is $0 \leq x0 \leq 220\ mm$.

**11.** The autonomous lawn mower according to claim 7, wherein

the installation angle further comprises a horizontal installation angle a1, and the horizontal installation angle a1 is an included angle between a perpendicular of the lens central axis of the image acquisition apparatus and a horizontal line;

the value range of the installation height h1 is 218 mm ≤ h1 ≤ 434 mm;
a value range of the installation distance x0 is 0 ≤ x0 ≤ 83 mm;
a value range of the horizontal installation angle a1 is 0° ≤ a1 ≤ 86°;
a value range of the vertical field of view angle a2 is 45° ≤ a2 ≤ 90°; and
a value range of the lens rotation angle a3 is 52° ≤ a3 ≤ 68°.

12. The autonomous lawn mower according to claim 7, wherein

the installation angle further comprises a horizontal installation angle α1, and the horizontal installation angle a1 is an included angle between a perpendicular of the lens central axis of the image acquisition apparatus and a horizontal line;
the value range of the installation height h1 is 200 mm ≤ h1 ≤ 400 mm;
a value range of the installation distance x0 is 0 ≤ x0 ≤ 40 mm;
a value range of the horizontal installation angle a1 is 30° ≤ a1 ≤ 45°;
a value range of the vertical field of view angle a2 is 60° ≤ a2 ≤ 80°; and
a value range of the lens rotation angle a3 is 30° ≤ a3 ≤ 45°.

13. The autonomous lawn mower according to claim 7, wherein a value range of the response distance is 135 mm to 1250 mm.

14. The autonomous lawn mower according to claim 7, wherein the first distance is greater than or equal to 800 mm.

15. The autonomous lawn mower according to claim 7, wherein the second distance is less than or equal to 0, the body has a projection onto the horizontal plane with the preset height, and the second distance being less than 0 comprises the second field of view boundary being within a range of the projection.

16. The autonomous lawn mower according to claim 7, wherein a value range of the blind spot threshold is 50 mm to 500 mm.

17. The autonomous lawn mower according to any one of claims 5 to 16, wherein the internal parameters of the image acquisition apparatus further comprise a horizontal field of view angle a4, and a value range of the horizontal field of view angle a4 of the image acquisition apparatus is 60° ≤ a4 ≤ 160°; or the internal parameters of the image acquisition apparatus further comprise a horizontal field of view angle a4, and a ratio of the horizontal field of view angle a4 to the vertical field of view angle a2 is 4:3 or 16:9.

18. The autonomous lawn mower according to claim 1, wherein the field of view area comprises a third field of view boundary located on a left side of the traveling direction and a fourth field of view boundary located on a right side of the traveling direction in a direction perpendicular to the traveling direction of the body, wherein a distance between the third field of view boundary and the fourth field of view boundary is 1.2 to 3 times a body width of the autonomous lawn mower.

19. The autonomous lawn mower according to claim 18, wherein a value range of the body width is 400 mm to 550 mm.

20. The autonomous lawn mower according to claim 18, wherein

the distance between the third field of view boundary and the fourth field of view boundary is determined based on the installation parameters, internal parameters of the image acquisition apparatus, and the preset height h3, wherein
the installation parameters at least comprise an installation height h1, and the internal parameters of the image acquisition apparatus comprise a horizontal field of view angle a4, wherein the horizontal field of view angle a4 is configured for determining a detection distance of the image acquisition apparatus in a body width direction.

21. The autonomous lawn mower according to claim 20, wherein

a value range of the installation height h1 is 150 mm ≤ h1 ≤ 500 mm;
a value range of the preset height h3 is 0 mm ≤ h3 ≤ 150 mm; and
a value range of the horizontal field of view angle a4 of the image acquisition apparatus is 60° ≤ a4 ≤ 160°.

22. The autonomous lawn mower according to claim 20, wherein the internal parameters of the image acquisition apparatus comprise a vertical field of view angle a2; and a value range of the vertical field of view angle a2 of the image acquisition apparatus is $45° \leq a2 \leq 90°$; or a ratio of the horizontal field of view angle a4 to the vertical field of view angle a2 is 4:3 or 16:9.

100

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

## INTERNATIONAL SEARCH REPORT

| International application No. |
| --- |
| **PCT/CN2023/087522** |

**A.    CLASSIFICATION OF SUBJECT MATTER**

A01D34/00(2006.01)i;   G06V20/10(2022.01)i

According to International Patent Classification (IPC) or to both national classification and IPC

**B.    FIELDS SEARCHED**

Minimum documentation searched (classification system followed by classification symbols)

IPC:A01D,G06V

Documentation searched other than minimum documentation to the extent that such documents are included in the fields searched

Electronic data base consulted during the international search (name of data base and, where practicable, search terms used)

CNTXT, ENTXTC, VEN: 割草, 清洁, 移动, 自主, 摄像, 图像, 识别, 刹车, 制动, 速度, 时间, 距离, 高度, 宽度, 角度, 视角, 视野, 边界; mow+, clean+, mov+, auto+, imag+, brak+, speed, time, distance, height, width, angle, view+, field

**C.    DOCUMENTS CONSIDERED TO BE RELEVANT**

| Category* | Citation of document, with indication, where appropriate, of the relevant passages | Relevant to claim No. |
| --- | --- | --- |
| X | CN 113156929 A (POSITEC POWER TOOLS (SUZHOU) CO., LTD.) 23 July 2021 (2021-07-23) <br> description, paragraphs 0038-0077, and figures 1-10 | 1, 5-22 |
| Y | CN 113156929 A (POSITEC POWER TOOLS (SUZHOU) CO., LTD.) 23 July 2021 (2021-07-23) <br> description, paragraphs 0038-0077, and figures 1-10 | 2-4 |
| Y | CN 107006229 A (JIANGSU UNIVERSITY OF SCIENCE AND TECHNOLOGY) 04 August 2017 (2017-08-04) <br> description, paragraph 0019, and figures 1-3 | 2-4 |
| A | CN 107291071 A (POSITEC POWER TOOLS (SUZHOU) CO., LTD.) 24 October 2017 (2017-10-24) <br> entire document | 1-22 |
| A | CN 109063575 A (CHINA JILIANG UNIVERSITY) 21 December 2018 (2018-12-21) <br> entire document | 1-22 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 June 2023** | **28 June 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/087522** |

**C.    DOCUMENTS CONSIDERED TO BE RELEVANT**

| Category* | Citation of document, with indication, where appropriate, of the relevant passages | Relevant to claim No. |
|---|---|---|
| A | CN 109343079 A (HEFEI TAIHE OPTOELECTRONIC TECHNOLOGY CO., LTD.) 15 February 2019 (2019-02-15)<br>entire document | 1-22 |
| A | US 2019384316 A1 (LINGDONG TECHNOLOGY BEIJING CO., LTD.) 19 December 2019 (2019-12-19)<br>entire document | 1-22 |

Form PCT/ISA/210 (second sheet) (July 2022)

**INTERNATIONAL SEARCH REPORT**
Information on patent family members

International application No.

**PCT/CN2023/087522**

| Patent document cited in search report | | | Publication date (day/month/year) | Patent family member(s) | | | Publication date (day/month/year) |
|---|---|---|---|---|---|---|---|
| CN | 113156929 | A | 23 July 2021 | None | | | |
| CN | 107006229 | A | 04 August 2017 | None | | | |
| CN | 107291071 | A | 24 October 2017 | WO | 2017166971 | A1 | 05 October 2017 |
| | | | | DE | 17773002 | T1 | 06 June 2019 |
| | | | | US | 2019113931 | A1 | 18 April 2019 |
| | | | | US | 11188087 | B2 | 30 November 2021 |
| | | | | EP | 3438778 | A1 | 06 February 2019 |
| | | | | EP | 3438778 | A4 | 11 September 2019 |
| | | | | EP | 3438778 | B1 | 20 October 2021 |
| CN | 109063575 | A | 21 December 2018 | CN | 109063575 | B | 23 December 2022 |
| CN | 109343079 | A | 15 February 2019 | None | | | |
| US | 2019384316 | A1 | 19 December 2019 | US | 11327502 | B2 | 10 May 2022 |
| | | | | CN | 110612806 | B | 20 April 2021 |
| | | | | CN | 110612806 | A | 27 December 2019 |

Form PCT/ISA/210 (patent family annex) (July 2022)